# EUROPEAN PATENT APPLICATION

(11) **EP 4 456 661 A1**
(43) Date of publication of application: **30.10.2024**
(21) Application number: 24169749.9
(22) Date of filing: 11.04.2024
(51) Int. Cl.: H04W 84/18, H04W 76/30, H04W 40/20

(54) **CONTROL DEVICE AND CONTROL METHOD**

(30) Priority: 27.04.2023 JP 2023073679
(71) Applicant: Panasonic Intellectual Property Management Co., Ltd., Kadoma-shi, Osaka 571-0057 (JP)
(72) Inventor: NISHIYASU, Kazuma, Kadoma-shi, Osaka 571-0057 (JP); TOMIO, Yuta, Kadoma-shi, Osaka 571-0057 (JP); KAMEDA, Kosuke, Kadoma-shi, Osaka 571-0057 (JP)
(74) Representative: Appelt, Christian W.

(57) **Abstract**

A control device (30) includes: a controller that, for each of a plurality of communication devices, determines a number for the communication devices according to a communication state of the communication device; and a communicator that communicates with the plurality of communication devices. The plurality of communication devices join a mesh network. When causing one or more communication devices among the plurality of communication devices to exit the mesh network, the controller performs exit processing for causing the one or more communication devices to exit the mesh network in order from a communication device for which an absolute value of a difference between (i) the number determined for one communication device, among the plurality of communication devices, currently communicating with the communicator and (ii) the number determined for each of the one or more communication devices is highest.

## Description

### Field

The present disclosure relates to a control device and a control method.

### Background

PTL 1 discloses a technique for causing a node (communication device) that has joined a mesh network to exit the mesh network.

### Citation List

### Patent Literature

PTL 1: International Publication No. 2014/080522

### Summary

### Technical Problem

Incidentally, when a plurality of communication devices exit a mesh network, a communication device may have difficulty leaving depending on the order in which the communication devices exit.

The present disclosure provides a control device and the like that make it easy for a communication device to exit a mesh network.

### Solution to Problem

A control device according to one aspect of the present disclosure includes: a controller that, for each of a plurality of communication devices, determines a number for the communication devices according to a communication state of the communication device; and a communicator that communicates with the plurality of communication devices. The plurality of communication devices join a mesh network. When causing one or more communication devices among the plurality of communication devices to exit the mesh network, the controller performs exit processing for causing the one or more communication devices to exit the mesh network in order from a communication device for which an absolute value of a difference between (i) the number determined for one communication device, among the plurality of communication devices, currently communicating with the communicator and (ii) the number determined for each of the one or more communication devices is highest.

A control method according to one aspect of the present disclosure is a control method executed by a control device. The control device includes a controller and a communicator that communicates with a plurality of communication devices, and the plurality of communication devices join a mesh network. The control method includes: determining, by the controller, for each of a plurality of communication device, a number for the communication device according to a communication state of the communication device; and when causing one or more communication devices among the plurality of communication devices to exit the mesh network, performing, by the controller, exit processing for causing the one or more communication devices to exit the mesh network in order from a communication device for which an absolute value of a difference between (i) the number determined for one communication device, among the plurality of communication devices, currently communicating with the communicator and (ii) the number determined for each of the one or more communication devices is highest.

### Advantageous Effects

The control device of the present disclosure can make it easy for a communication device to exit a mesh network.

### Brief Description of Drawings

**[****FIG. 1****]**

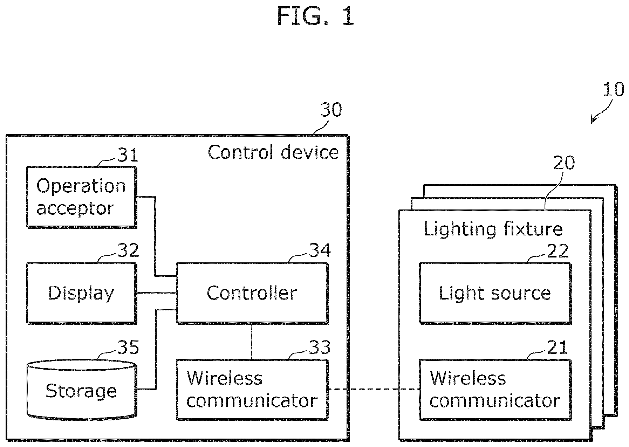

   FIG. 1 is a block diagram illustrating the functional configuration of a communication system according to an embodiment.
**[****FIG. 2****]**

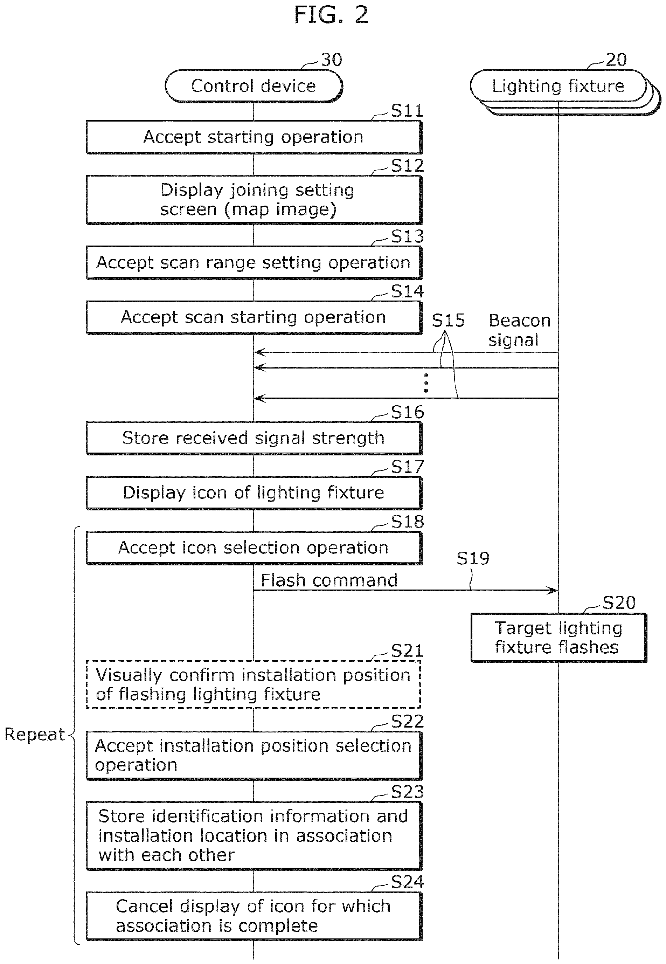

   FIG. 2 is a sequence chart illustrating first joining processing according to Example 1 of the embodiment.
**[****FIG. 3****]**

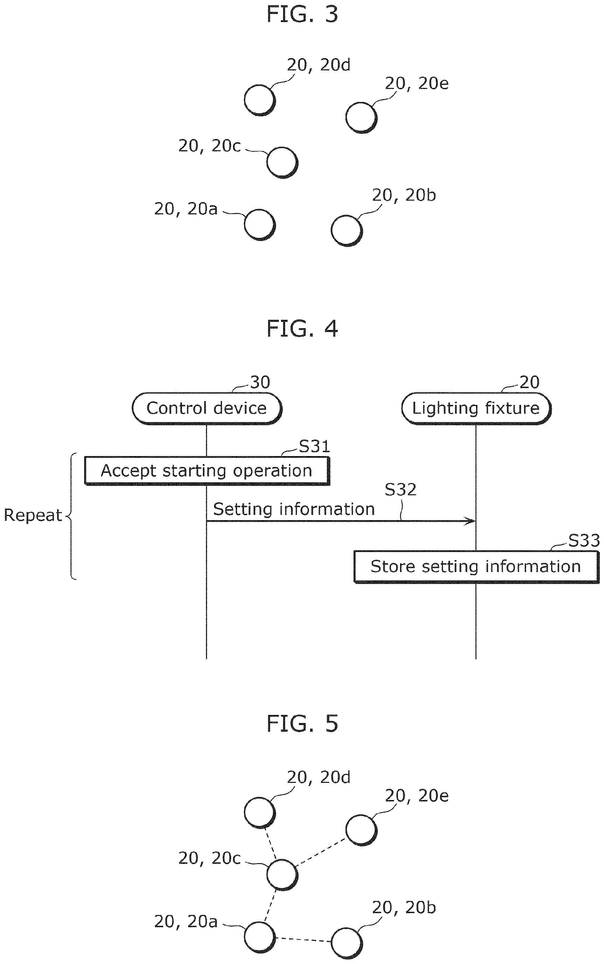

   FIG. 3 is a diagram illustrating an example of a map image according to Example 1 of the embodiment.
**[****FIG. 4****]**
   FIG. 4 is a sequence chart illustrating second joining processing according to Example 1 of the embodiment.
**[****FIG. 5****]**
   FIG. 5 is a diagram illustrating an example of a map image according to Example 1 of the embodiment.
**[****FIG. 6****]**

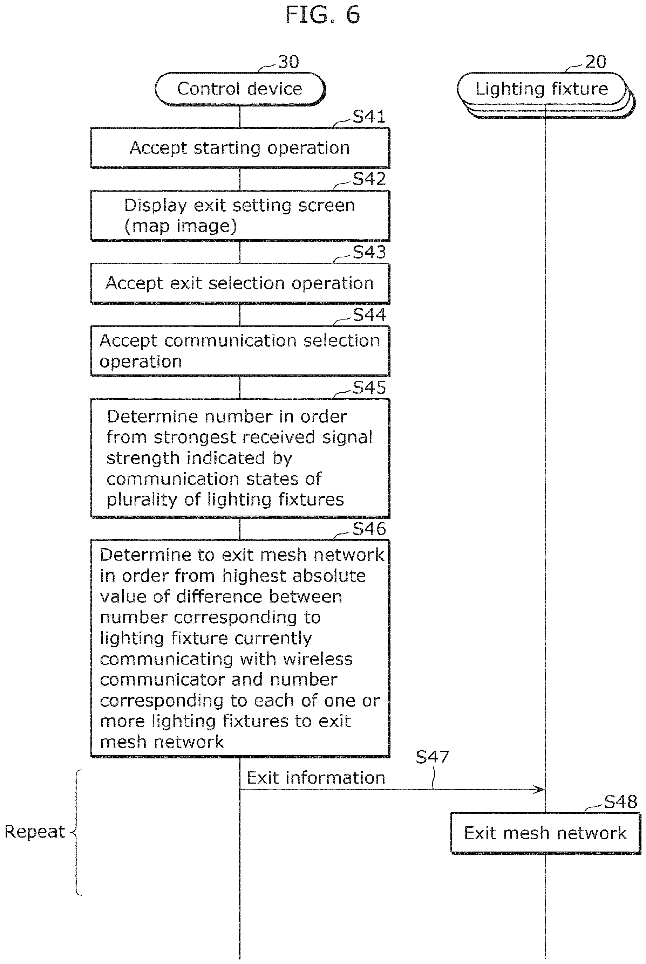

   FIG. 6 is a sequence chart illustrating initialization processing according to Example 1 of the embodiment.
**[****FIG. 7****]**

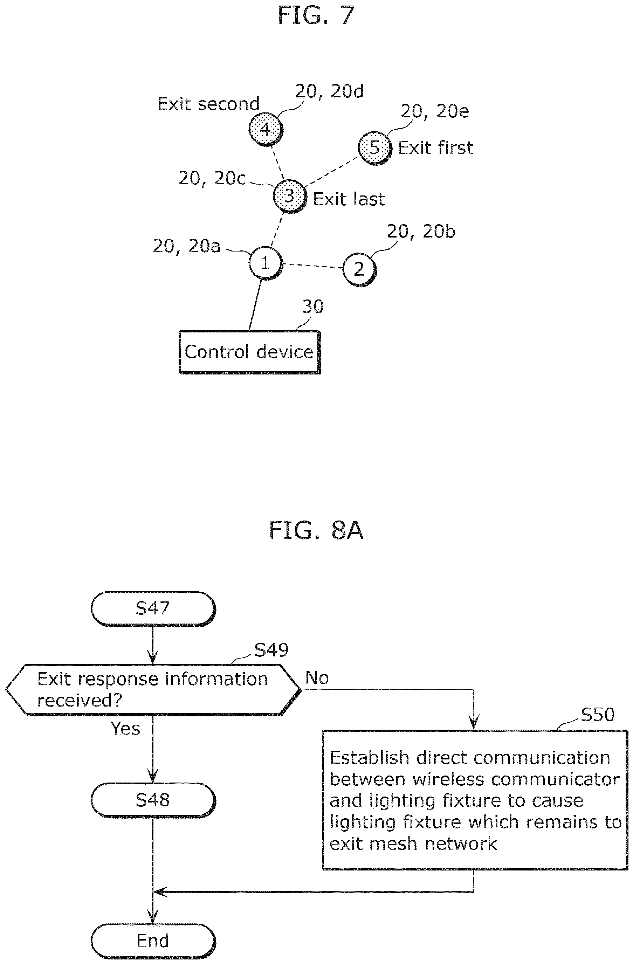

   FIG. 7 is a diagram illustrating an example of a map image according to Example 1 of the embodiment.
**[****FIG. 8A****]**
   FIG. 8A is a flowchart illustrating Variation 1 on Example 1 of the embodiment.
**[****FIG. 8B****]**

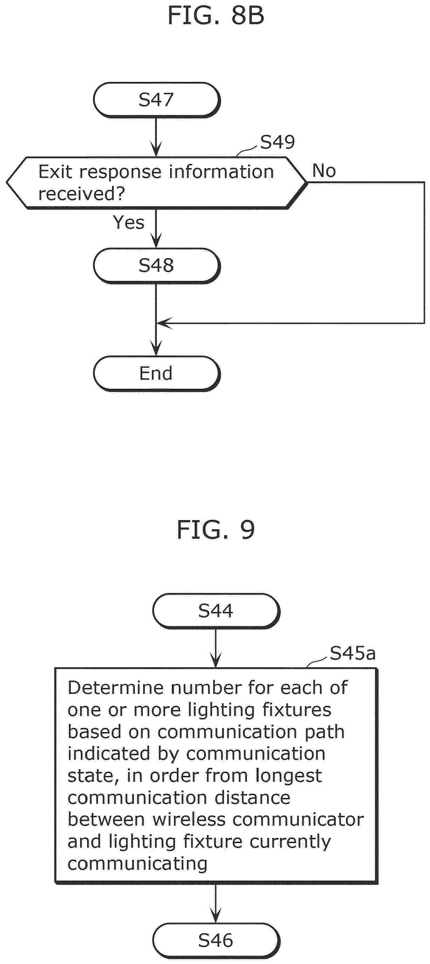

   FIG. 8B is a flowchart illustrating Variation 2 on Example 1 of the embodiment.
**[****FIG. 9****]**
   FIG. 9 is a flowchart illustrating Variation 3 on Example 1 of the embodiment.
**[****FIG. 10****]**

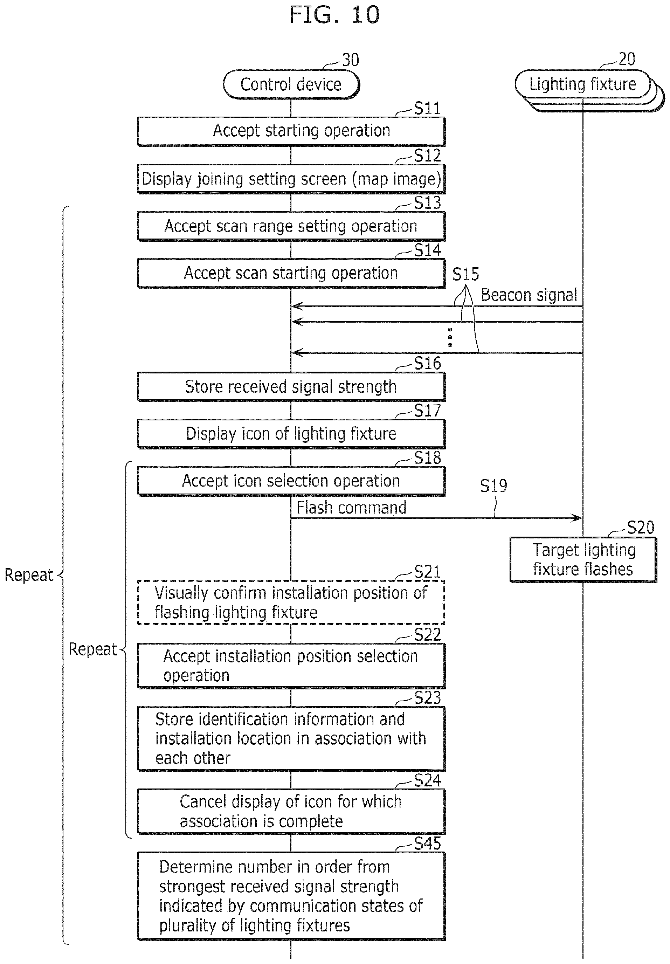

   FIG. 10 is a sequence chart illustrating first joining processing according to Example 2 of the embodiment.
**[****FIG. 11****]**

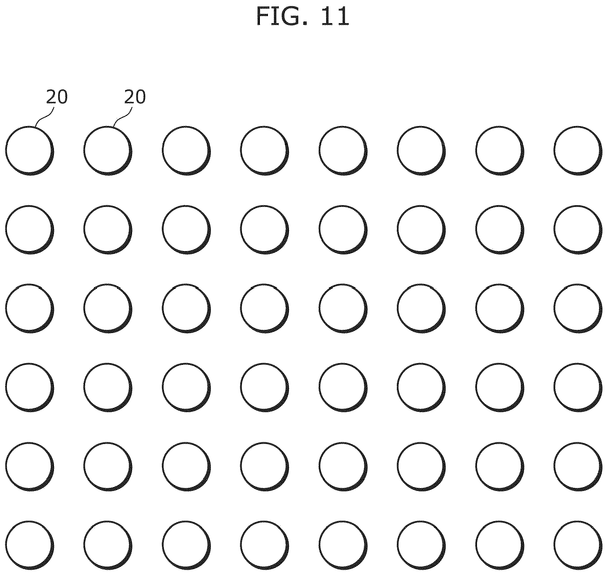

   FIG. 11 is a diagram illustrating an example of a map image according to Example 2 of the embodiment.
**[****FIG. 12****]**

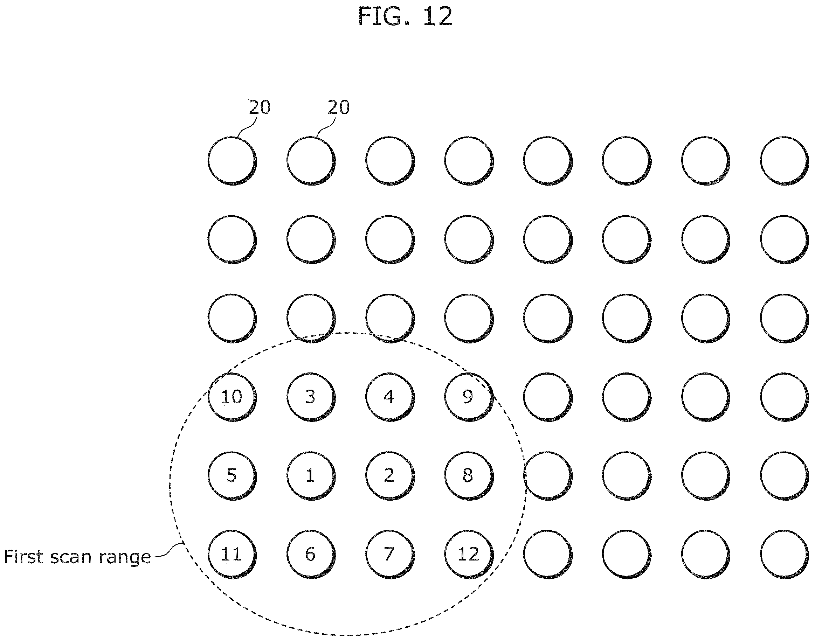

   FIG. 12 is a map image illustrating a first scan range according to Example 2 of the embodiment.
**[****FIG. 13****]**

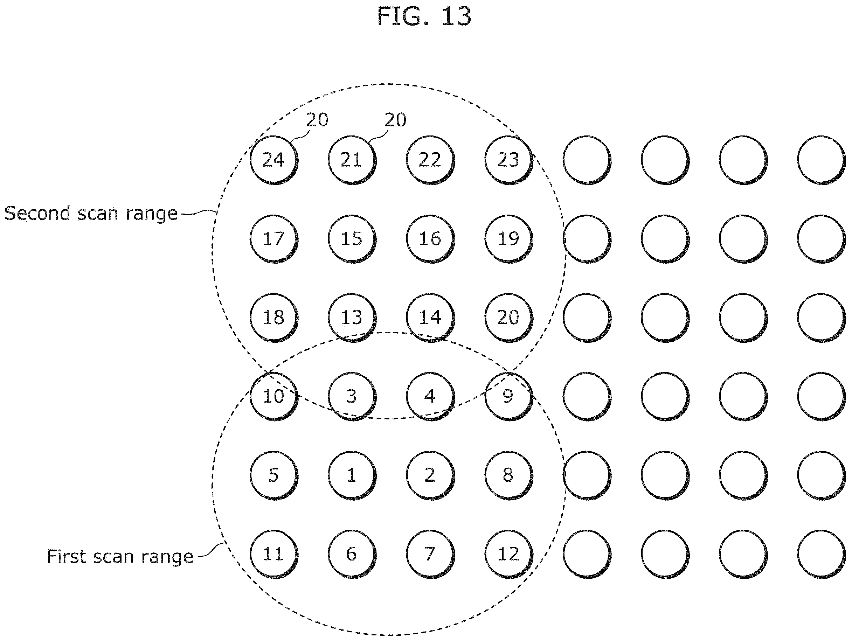

   FIG. 13 is a map image illustrating a second scan range according to Example 2 of the embodiment.
**[****FIG. 14****]**

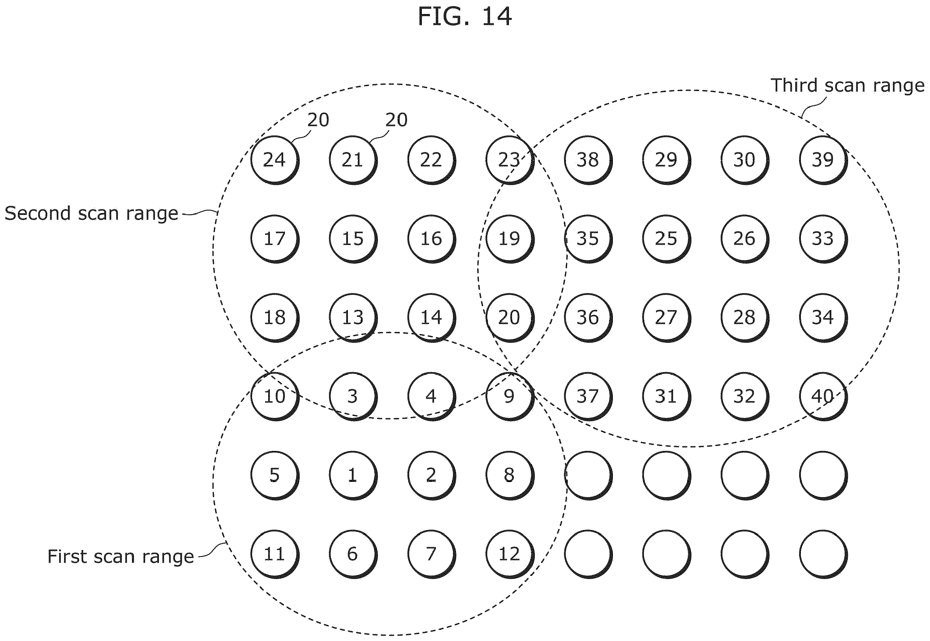

   FIG. 14 is a map image illustrating a third scan range according to Example 2 of the embodiment.
**[****FIG. 15****]**

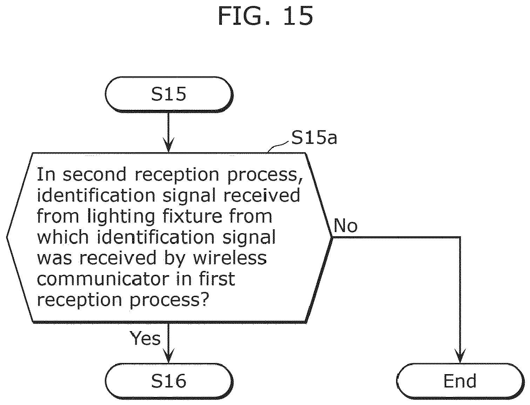

   FIG. 15 is a flowchart illustrating the first joining processing according to Example 2 of the embodiment in more detail.
**[****FIG. 16****]**

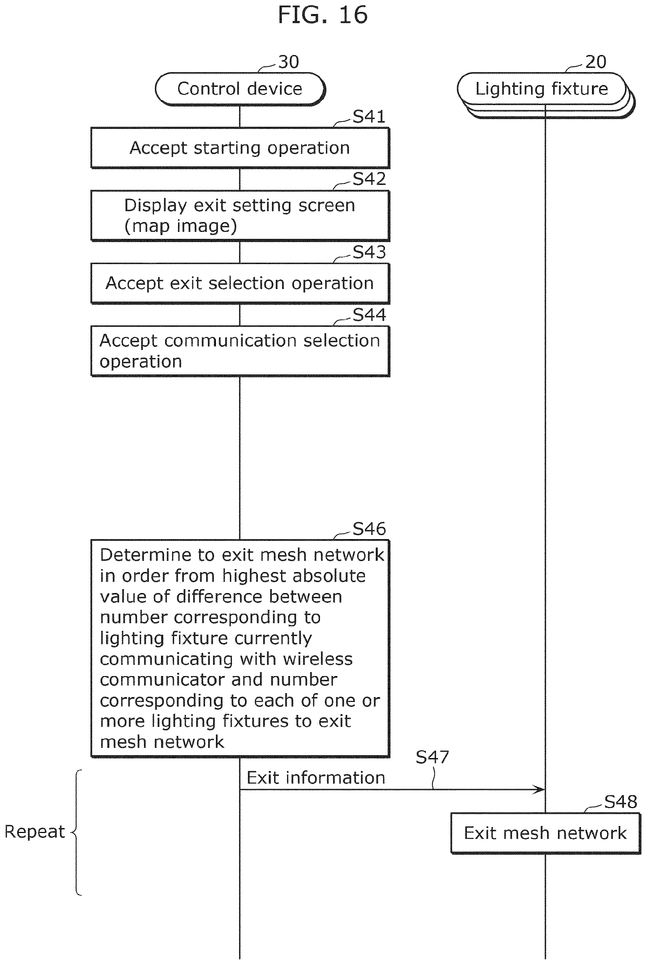

   FIG. 16 is a sequence chart illustrating initialization processing according to Example 2 of the embodiment.
**[****FIG. 17****]**

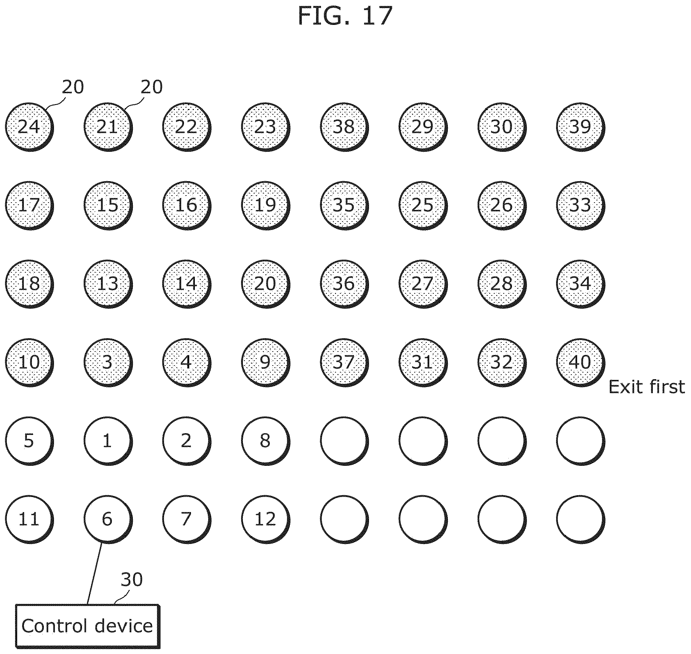

   FIG. 17 is a diagram illustrating an example of a map image according to Example 2 of the embodiment.
**[****FIG. 18****]**

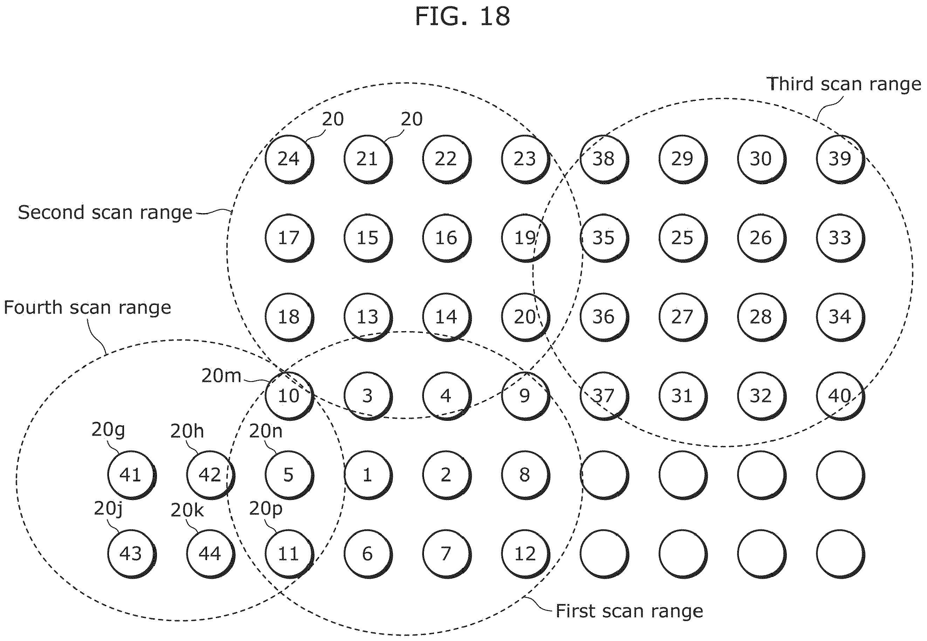

   FIG. 18 is a diagram illustrating an example of a map image according to Example 3 of the embodiment.
**[****FIG. 19****]**

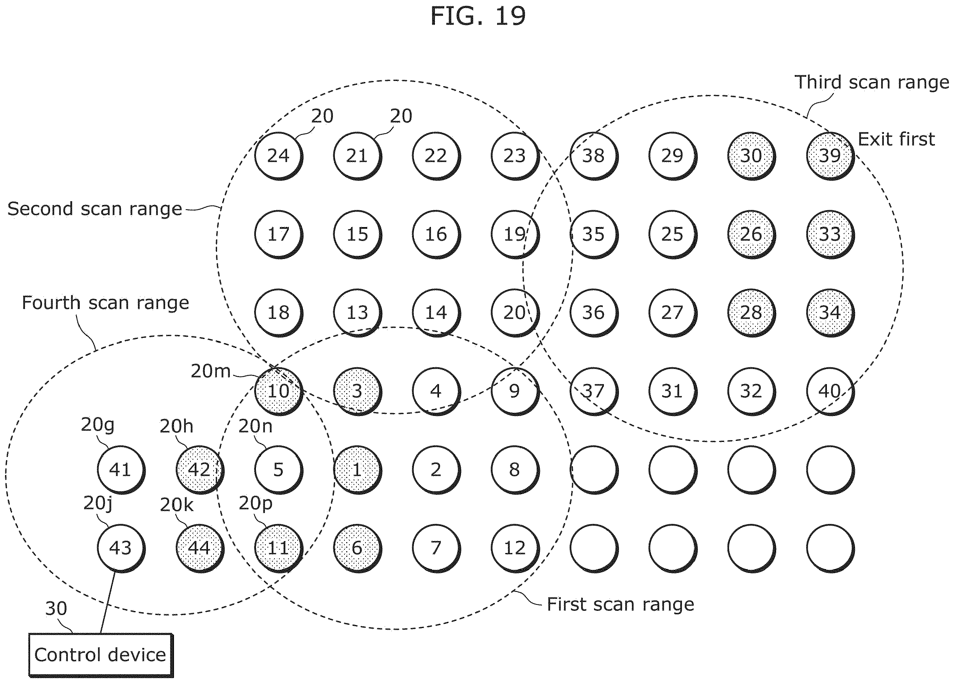

   FIG. 19 is a diagram illustrating an example of a map image according to Example 3 of the embodiment.
**[****FIG. 20****]**

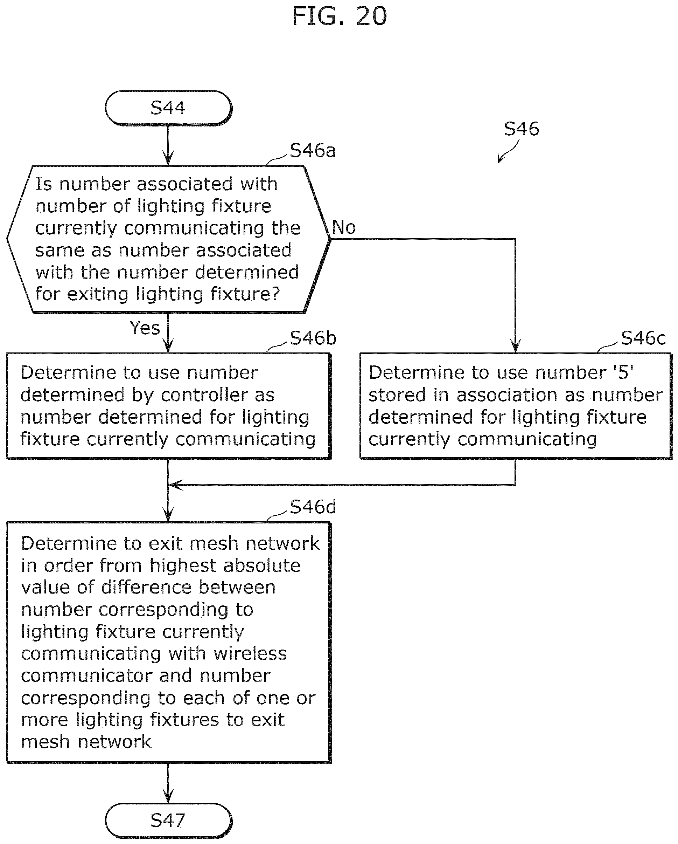

   FIG. 20 is a flowchart illustrating step S46 of Example 3 of the embodiment in more detail.
**[****FIG. 21****]**

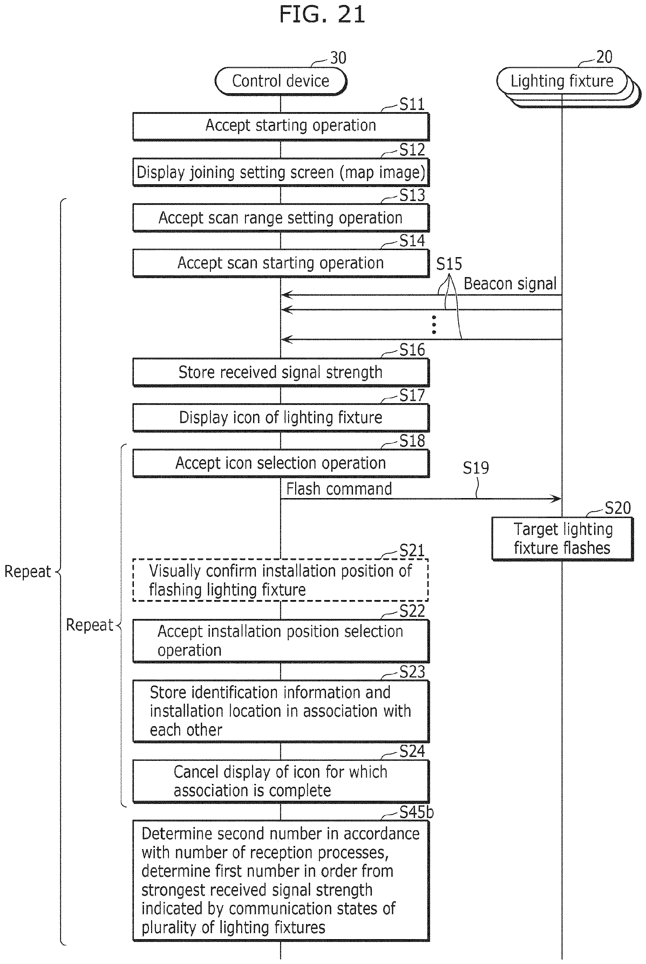

   FIG. 21 is a sequence chart illustrating first joining processing according to Example 4 of the embodiment.
**[****FIG. 22****]**

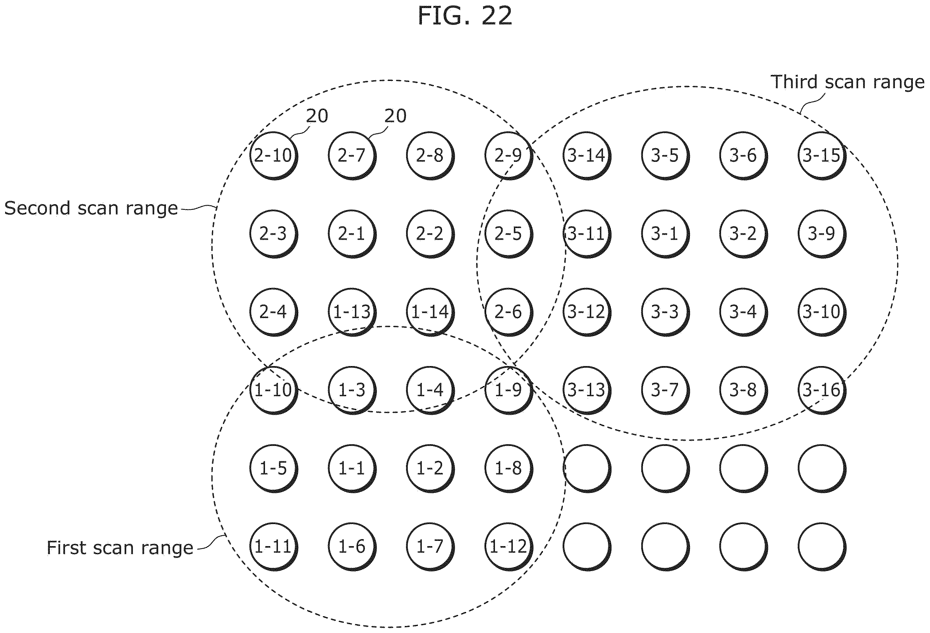

   FIG. 22 is a diagram illustrating an example of a map image according to Example 4 of the embodiment.
**[****FIG. 23****]**

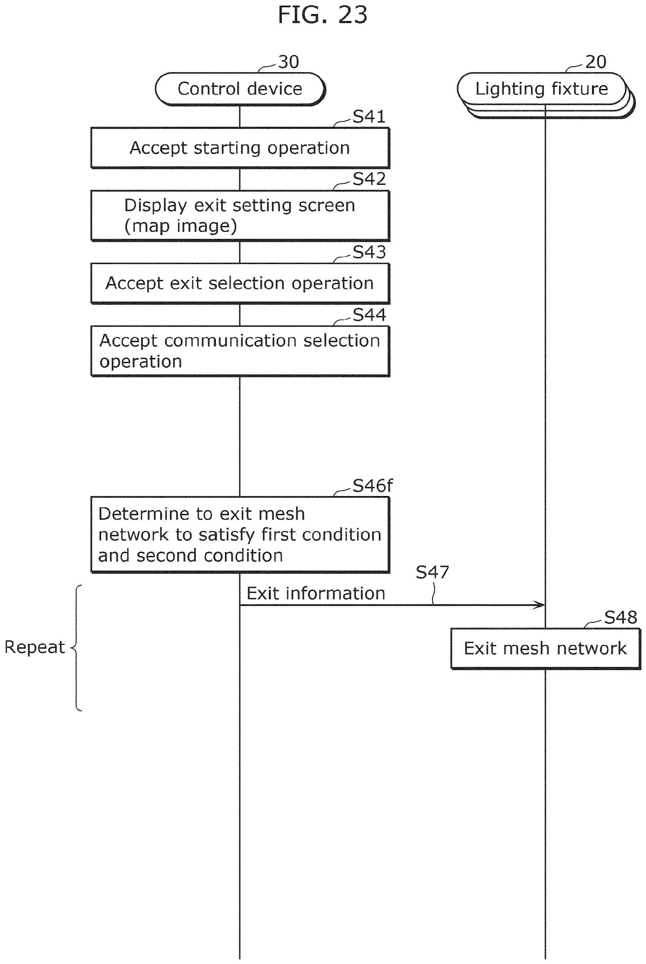

   FIG. 23 is a sequence chart illustrating initialization processing according to Example 4 of the embodiment.
**[****FIG. 24****]**

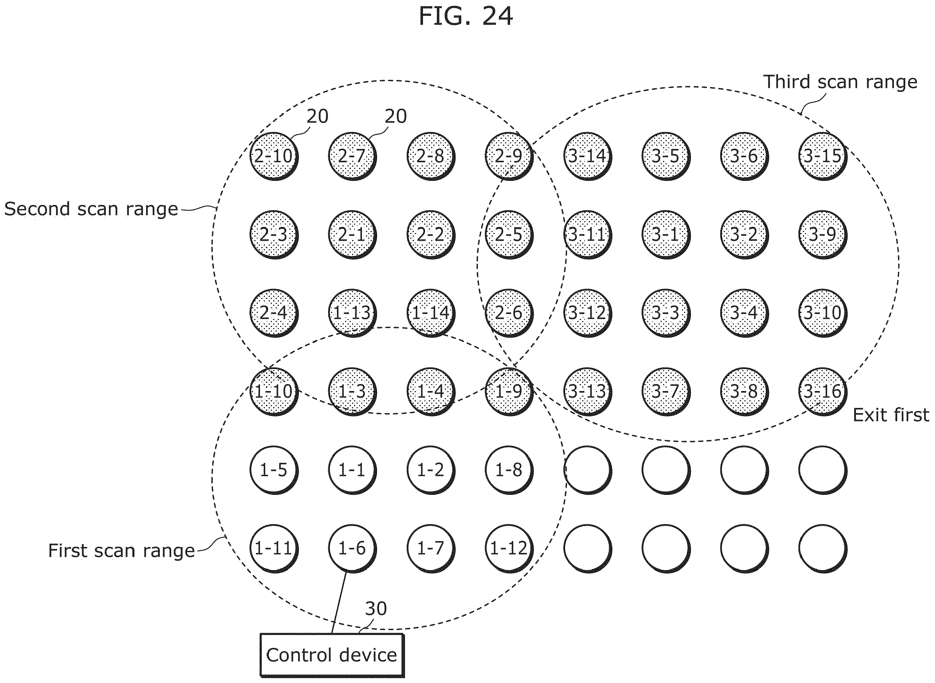

   FIG. 24 is a diagram illustrating an example of a map image according to Example 4 of the embodiment.

### Description of Embodiment

An embodiment will be described in detail hereinafter with reference to the drawings. The following embodiment will describe a general or specific example. The numerical values, shapes, materials, constituent elements, arrangements and connection states of constituent elements, steps, orders of steps, and the like in the following embodiment are merely examples, and are not intended to limit the present disclosure. Additionally, of the constituent elements in the following embodiment, constituent elements not denoted in the independent claims will be described as optional constituent elements.

Note also that the drawings are schematic diagrams, and are not necessarily exact illustrations. Configurations that are substantially the same are given the same reference signs in the drawings, and redundant descriptions may be omitted or simplified.

### Embodiment

### Configuration

The configuration of communication system 10 according to an embodiment will be described first. FIG. 1 is a block diagram illustrating the functional configuration of communication system 10 according to the present embodiment. As illustrated in FIG. 1, communication system 10 includes a plurality of communication devices (a plurality of lighting fixtures 20) and control device 30.

In communication system 10, each of the plurality of communication devices, which are the plurality of lighting fixtures 20, has wireless communication functionality, and the plurality of communication devices form a mesh network. A single communication device, i.e., a single lighting fixture 20, corresponds to a single communication node. In a mesh network, when transmitting information from one communication node (also referred to as a "first communication node") to another communication node (also referred to as a "second communication node"), the information is transmitted using a bucket relay system.

Specifically, when the first communication node broadcasts information including address information (destination information) of the second communication node, each of the other communication nodes in the same mesh network as the first communication node that received the stated information further broadcasts that received information. In other words, each of the other communication nodes relays the information. By repeating the relay of information within the same mesh network, the stated information sent by the first communication node is passed to all the communication nodes in the same mesh network as the first communication node. The second communication node can therefore receive the information sent by the first communication node.

The information transmitted over the mesh network is, for example, exit information for causing a communication device to exit the mesh network. For example, if the communication device is lighting fixture 20, the information transmitted over the mesh network is control information for controlling lighting fixture 20 to turn on, turn off, or dim. If an environment sensor is included in the mesh network (described later), a measured value from the environment sensor (sensing information) may be transmitted.

The communication device will be described first. The communication device may be any device capable of communicating with devices other than the communication device, and is lighting fixture 20 in the present embodiment. The communication device may also be an environment sensor, a camera, or the like, for example.

Lighting fixture 20 will be further described as an example of the communication device. Lighting fixture 20 is a base light which is installed in a ceiling of an interior space and illuminates the interior space. Each of the plurality of lighting fixtures 20, which are the plurality of communication devices as described above, has wireless communication functionality. The plurality of lighting fixtures 20 join a mesh network (and more specifically, a wireless mesh network), i.e., form a mesh network. Note that the form of lighting fixture 20 is not particularly limited, and may be a ceiling light, a downlight, a spotlight, or the like. Lighting fixture 20 specifically includes wireless communicator 21 and light source 22.

Wireless communicator 21 is wireless communication circuitry for the communication device (lighting fixture 20) to communicate wirelessly (and more specifically, over radio waves) with other communication devices (lighting fixtures 20) and control device 30. After lighting fixture 20 joins the mesh network, wireless communicator 21 communicates over the mesh network. Wireless communicator 21 also sends an identification signal that identifies lighting fixture 20. The identification signal includes identification information that identifies lighting fixture 20 (the communication device). For example, the identification signal is a beacon signal (sometimes called an "advertising signal" or the like), and lighting fixture 20 periodically sends the beacon signal and communicates wirelessly with control device 30 that has received the beacon signal. Specifically, wireless communicator 21 communicates wirelessly according to a communication standard such as Bluetooth (registered trademark) Low Energy (BLE) or Wi-Fi (registered trademark).

Light source 22 emits white light into the interior space in order for lighting fixture 20 to illuminate the interior space. Light source 22 is realized by a Light Emitting Diode (LED) device, for example, but may be realized by another light-emitting element such as a semiconductor laser, an organic electroluminescence (EL) device, an inorganic EL device, or the like.

The configuration of control device 30 will be described next. Control device 30 is an information terminal that performs joining processing for causing a communication device (lighting fixture 20) to join the mesh network. Control device 30 also performs initialization processing for putting a communication device (lighting fixture 20) in a state where the device is not on the mesh network.

Control device 30 is a mobile terminal such as a smartphone, a tablet terminal, or a Personal Digital Assistant (PDA), for example. Control device 30 may also be a dedicated remote controller used in communication system 10. Control device 30 is used by a user when the joining processing and initialization processing are performed. The "user" here is, for example, a worker who installed the plurality of lighting fixtures 20 in the ceiling, but may be another user aside from the worker. The user may be an administrator or the like of communication system 10, for example. Control device 30 specifically includes operation acceptor 31, display 32, wireless communicator 33, controller 34, and storage 35.

Operation acceptor 31 accepts user operations. Specifically, operation acceptor 31 is realized by a touch panel or the like.

Display 32 displays images necessary for the joining processing and the initialization processing. Display 32 is realized by a display panel such as a liquid crystal panel, an organic EL panel, or the like, for example.

Wireless communicator 33, which is an example of a communicator, is wireless communication circuitry for control device 30 to communicate wirelessly (and more specifically, over radio waves) with each of the plurality of lighting fixtures 20. Specifically, wireless communicator 33 communicates wirelessly according to a communication standard such as BLE or Wi-Fi (registered trademark).

Controller 34 performs information processing pertaining to the joining processing and the initialization processing in response to a user operation accepted by operation acceptor 31. Controller 34 also performs reception processing that causes wireless communicator 33 to receive an identification signal, which identifies lighting fixture 20, output (or sent) from each of the plurality of lighting fixtures 20. The reception processing is included in the joining processing. In other words, controller 34 performs the reception processing to cause the plurality of lighting fixtures 20 to join the mesh network. Controller 34 also performs exit processing to cause lighting fixtures 20 to exit the mesh network. As one example, the exit processing is processing for changing or deleting setting information stored in storage (not shown) provided in lighting fixture 20 when lighting fixture 20 joined the mesh network. This setting information is information necessary for communication over the mesh network. The exit processing is included in the initialization processing. Controller 34 is realized by a microcomputer, for example, but may be realized by a processor or dedicated circuitry. The functions of controller 34 are realized by the hardware constituting controller 34, such as a microcomputer or a processor, executing a computer program (software) stored in storage 35.

Storage 35 is a storage device that stores information necessary for information processing pertaining to the joining processing and initialization processing, such as a computer program executed by controller 34 and the like. Storage 35 is realized by semiconductor memory or the like, for example.

The joining processing and initialization processing will be described hereinafter with reference to Examples 1 to 4.

### Example 1

Example 1 will describe an example in which communication system 10 includes five lighting fixtures 20 as the plurality of communication devices.

The joining processing and initialization processing will be described hereinafter.

Note that the joining processing includes first joining processing that associates an installation position of lighting fixture 20 with the identification information of lighting fixture 20, and second joining processing (also referred to as "provisioning") that stores information for causing lighting fixture 20 to join the mesh network in each of the plurality of lighting fixtures 20.

### First Joining Processing

The first joining processing will be described first. FIG. 2 is a sequence chart illustrating the first joining processing according to Example 1 of the present embodiment. The first joining processing illustrated in FIG. 2 is performed, for example, after the plurality of lighting fixtures 20 are installed in the ceiling by the worker.

First, operation acceptor 31 of control device 30 accepts, from the user, a starting operation instructing the first joining processing to be started (S11).

Based on the starting operation accepted by operation acceptor 31, controller 34 displays a joining setting screen including a map image in display 32 (S12). FIG. 3 is a diagram illustrating an example of the map image according to Example 1 of the present embodiment. The map image is, for example, a diagram showing the interior space where the plurality of lighting fixtures 20 are installed from above, and in the example in FIG. 3, the installation positions of the plurality of lighting fixtures 20 are indicated by circles. In other words, the map image indicates the installation positions of the plurality of lighting fixtures 20. The map image is stored in storage 35 in advance. Note that in Example 1, the plurality of lighting fixtures 20 may be identified as lighting fixtures 20a, 20b, 20c, 20d, and 20e.

At the time of step S12, the arrangement of the plurality of lighting fixtures 20 is known, but which lighting fixture 20 is located at which position is unknown. In other words, at the time of step S12, the installation positions of lighting fixtures 20 are not yet associated with the identification information of lighting fixtures 20.

Here, before joining the mesh network, each of the plurality of lighting fixtures 20 periodically sends a beacon signal (sometimes called an "advertising signal" or the like). The beacon signal sent by each of the plurality of lighting fixtures 20 includes the identification information (a MAC address or the like) of the corresponding lighting fixture 20.

Operation acceptor 31 accepts, from the user, a scan range setting operation and a scan starting operation (S13 and S14). The scan range setting operation is an operation for changing a received signal strength threshold (described later).

Upon the scan starting operation being accepted, controller 34 performs reception processing that causes wireless communicator 33 to receive the beacon signal, which is an identification signal output by each of the plurality of communication devices (the plurality of lighting fixtures 20) to identify the corresponding communication device (lighting fixture 20). In other words, wireless communicator 33 receives the beacon signal from each of the plurality of lighting fixtures 20 (S15). Here, for the sake of simplicity, all of the plurality of lighting fixtures 20 are assumed to be located within a range where communication with wireless communicator 33 is possible.

Controller 34 measures the received signal strength of each of the beacon signals, among the received beacon signals, which are from lighting fixtures 20 which have not yet joined the mesh network, and stores the received signal strength measured for each of the plurality of beacon signals in storage 35 (S16). Note that controller 34 selects a beacon signal, among the received beacon signals, having a received signal strength that is at least a threshold, and only the received signal strength of each of the selected plurality of beacon signals is stored in storage 35. In Example 1, the received signal strengths of the beacon signals sent from all five lighting fixtures 20a to 20e are stored in storage 35.

Here, the received signal strength may be a maximum value of the received signal strength over a set period, an average value of the received signal strength over a set period, or a minimum value of the received signal strength over a set period. The threshold is changed by the scan range setting operation accepted in step S13, and the threshold takes on a lower (smaller) value as the scan range is set to a broader range.

Next, controller 34 displays, in display 32, an icon of lighting fixture 20 that sent the stored beacon signal (S17). The icon is equivalent to an icon corresponding to the identification information included in the beacon signal from lighting fixture 20 which has not yet joined the mesh network, stored in step S16 (that is, an icon indicating the identification information).

Next, operation acceptor 31 accepts, from the user, a joining selection operation for a plurality of the icons (S18). The joining selection operation is, for example, an operation of tapping one of the plurality of icons. Controller 34 causes wireless communicator 33 to send a flash command based on the joining selection operation accepted by operation acceptor 31 (S19).

The flash command specifies the identification information of lighting fixture 20 corresponding to the selected icon. The flash command is a signal for selectively causing a target lighting fixture 20, which is lighting fixture 20 having the corresponding identification information among the plurality of lighting fixtures 20, to flash. Upon receiving the flash command, the target lighting fixture 20 among the plurality of lighting fixtures 20 flashes (S20).

The user operating control device 30 visually confirms the actual installation position of the target lighting fixture 20 that is flashing (S21), and specifies the installation position of the target lighting fixture 20 that is flashing (e.g., one of the five installation positions) on the map image. Operation acceptor 31 accepts, from the user, an operation for specifying the installation position of lighting fixture 20 in the map image (S22). Then, controller 34 stores the identification information indicated by the icon selected in step S18 and the installation position specified in step S22 in association with each other in storage 35 (S23). Controller 34 also stops displaying the icon for which the association is complete (S24). In other words, the number of icons displayed in step S17 is reduced by one.

The processing of steps S18 to S24 is repeated until all the icons (identification information) displayed in step S17 are associated with installation positions.

### Second Joining Processing

The second joining processing (also referred to as "provisioning") will be described next. FIG. 4 is a sequence chart illustrating the second joining processing according to Example 1 of the present embodiment.

First, operation acceptor 31 of control device 30 accepts, from the user, a starting operation instructing the second joining processing to be started (S31). The starting operation includes an operation for specifying the identification information of lighting fixture 20 and the like. Controller 34 communicates through unicast with lighting fixture 20 having the identification information specified by the starting operation, and causes wireless communicator 33 to send the setting information to lighting fixture 20 (S32). Lighting fixture 20 receives the setting information and stores the setting information in storage (not shown) provided in lighting fixture 20 (S33).

The setting information is information for lighting fixture 20 to join the mesh network. The setting information includes a network ID of the mesh network which lighting fixture 20 is on and address information (a unicast address) of lighting fixture 20 used for communication within the mesh network. The setting information may, if necessary, include a security passcode and frequency channel information used for communication within the mesh network, as well as information about control device 30 (information about the device managing the mesh network). If lighting fixture 20 is a higher-level node capable of communicating with lighting fixture 20 on another mesh network, the setting information may include information necessary for lighting fixture 20 to function as a higher-level node.

Lighting fixture 20 for which the setting information is stored in the storage can join the mesh network. The processing of steps S31 to S33 is repeated until all lighting fixtures 20 join the mesh network. Lighting fixture 20 which has joined the mesh network stops periodically sending the beacon signal sent before joining the mesh network.

Note that the processing of steps S31 to S33 may be included in the first joining processing (FIG. 2). For example, the processing of steps S31 to S33 may be performed for the target lighting fixture 20 after step S23 of the first joining processing.

Alternatively, the processing of step S22 may be performed assuming that the processing of step S31 has been performed. In other words, by performing the processing of steps S23 and S24 after the processing of step S22, the installation position and identification information of the one lighting fixture 20 are associated with each other; then, by performing the processing of steps S32 and S33, provisioning may be performed for the one lighting fixture 20.

FIG. 5 is a diagram illustrating an example of the map image according to Example 1 of the present embodiment. More specifically, FIG. 5 is a map image from after the plurality of lighting fixtures 20 have joined the mesh network. In FIG. 5, communication paths among the plurality of lighting fixtures 20 over the mesh network are represented by broken lines.

As illustrated in FIG. 5, as a result of the first joining processing and the second joining processing, lighting fixtures 20a and 20b are capable of communicating with each other over the mesh network, and lighting fixtures 20a and 20c are capable of communicating with each other over the mesh network. Furthermore, lighting fixtures 20c and 20d are capable of communicating with each other over the mesh network, and lighting fixtures 20c and 20e are capable of communicating with each other over the mesh network.

For example, when information is transmitted from lighting fixture 20a to lighting fixture 20d, the information is transmitted over the mesh network in the order of lighting fixture 20a, lighting fixture 20c, and lighting fixture 20d. In other words, the information is transmitted from lighting fixture 20a to lighting fixture 20d via lighting fixture 20c. Note that if, for example, lighting fixture 20c has exited the mesh network, the information cannot be transmitted from lighting fixture 20a to lighting fixture 20d over the mesh network.

The communication path described above is stored in storage 35.

In this manner, the plurality of lighting fixtures 20 join the mesh network through the first joining processing and the second joining processing. Incidentally, after the plurality of communication devices (the plurality of lighting fixtures 20) are installed and used in the interior space, it may be necessary to cause some or all of lighting fixtures 20 among the plurality of lighting fixtures 20 to exit the mesh network. In this case, initialization processing is performed to put a communication device (lighting fixture 20) in a state where the device is not on the mesh network.

### Initialization Processing

FIG. 6 is a sequence chart illustrating the initialization processing according to Example 1 of the present embodiment.

First, operation acceptor 31 of control device 30 accepts, from the user, a starting operation instructing the initialization processing to be started (S41).

Based on the starting operation accepted by operation acceptor 31, controller 34 displays an exit setting screen including a map image in display 32 (S42). FIG. 7 is a diagram illustrating an example of the map image according to Example 1 of the present embodiment. Like the map image included in the joining setting screen, this map image is a diagram showing the interior space where the plurality of lighting fixtures 20 are installed from above, for example.

Next, operation acceptor 31 accepts, from the user, an exit selection operation instructing which lighting fixture 20 among the plurality of lighting fixtures 20 is to be caused to exit (S43). The exit selection operation is, for example, an operation of tapping one of the circles (icons) illustrated in FIG. 7. Here, the user performs an operation of tapping a circle (icon) corresponding to one or more lighting fixtures 20, among the plurality of lighting fixtures 20, that are to exit the mesh network (more specifically, lighting fixtures 20c, 20d, and 20e). One or more lighting fixtures 20 (i.e., lighting fixtures 20c, 20d, and 20e) that are to exit the mesh network are selected as a result. In the map image illustrated in FIG. 7, the circles (icons) that were tapped in the exit selection operation is marked with a dot.

Furthermore, operation acceptor 31 accepts, from the user, a communication selection operation designating a communication device (lighting fixture 20) that communicates with wireless communicator 33 (S44). The communication selection operation is, for example, an operation of tapping one of the circles (icons) illustrated in FIG. 7. Here, the user performs an operation of tapping a circle (icon) corresponding to lighting fixture 20a as lighting fixture 20 that communicates with wireless communicator 33. Lighting fixture 20 (i.e., lighting fixture 20a) that communicates directly with wireless communicator 33 (i.e., not over the mesh network) is selected as a result.

Next, controller 34 determines a number for each of the plurality of communication devices according to a communication state of the plurality of communication devices. More specifically, controller 34 determines the number in order from the strongest received signal strength indicated in the communication state of the plurality of lighting fixtures 20 (S45).

Here, the "communication state" of the plurality of lighting fixtures 20 indicates the received signal strength of each of the plurality of identification signals (beacon signals) received by wireless communicator 33. The received signal strength of each of the plurality of identification signals (beacon signals) in step S16 of the above-described first joining processing is stored in storage 35. Based on the received signal strength of each of the plurality of stored identification signals, controller 34 determines a number for each of the plurality of lighting fixtures 20 such that the numerical value thereof is smaller for stronger received signal strengths. For example, the numbers are determined as follows when the order from the strongest received signal strength is lighting fixture 20a, lighting fixture 20b, lighting fixture 20c, lighting fixture 20d, and lighting fixture 20e. "1" is determined for lighting fixture 20a; "2", for lighting fixture 20b; "3", for lighting fixture 20c; "4", for lighting fixture 20d; and "5", for lighting fixture 20e. The shorter the distance between control device 30 and one lighting fixture 20 is, the stronger the received signal strength of that one lighting fixture 20 becomes. Accordingly, the order from the strongest received signal strength is the order from lighting fixture 20 that is closest to control device 30 at the point in time of step S15. The plurality of numbers determined in step S45 may be stored in storage 35. As illustrated in FIG. 7, the determined number is shown for the circle (icon) corresponding to lighting fixture 20.

When the number is determined in step S45, controller 34 determines an order in which to cause each of the one or more lighting fixtures 20 selected in step S43 to exit the mesh network. Here, controller 34 determines to cause lighting fixtures 20 to exit from the mesh network in order from the highest absolute value of the difference between (i) the number determined for lighting fixture 20, among the plurality of lighting fixtures 20, currently communicating with wireless communicator 33 and (ii) the number determined for each of the one or more lighting fixtures 20 that will exit the mesh network (S46).

Lighting fixture 20 which, among the plurality of communication devices, is currently communicating with wireless communicator 33 is lighting fixture 20 indicated by the communication selection operation made in step S44, and is specifically lighting fixture 20a. In other words, wireless communicator 33 and wireless communicator 21 of lighting fixture 20a communicate directly (i.e., not over the mesh network). The number determined for lighting fixture 20a is "1" as described above.

In step S46, controller 34 determines an order in which lighting fixtures 20c to 20e selected in step S43 are to exit the mesh network. Controller 34 causes the lighting fixtures to exit the mesh network in order from the lighting fixture having the highest absolute value for the difference between (i) "1", which is the number determined for lighting fixture 20a currently communicating with wireless communicator 33, and (ii) the number determined for each of lighting fixtures 20c to 20e. Here, because the numbers determined for lighting fixtures 20c to 20e are "3", "4", and "5", respectively, controller 34 determines to cause lighting fixture 20e, lighting fixture 20d, and lighting fixture 20c to exit the mesh network in that order.

This result is shown in Table 1. Table 1 is a table showing the order in which lighting fixtures 20 exit the mesh network, determined in step S46.

**Table 1**

| Number of lighting fixture to exit | Absolute value of difference between number of lighting fixtu re cu rrently communicating and number of lighting fixture to exit | Order of exit |
|---|---|---|
| 3 | \|1 - 3\| = 2 | 3 (last) |
| 4 | \|1 - 4\| = 3 | 2 |
| 5 | \|1 - 5\| = 4 | 1 (first) |

Controller 34 causes lighting fixtures 20c to 20e to exit the mesh network in the order determined in step S46. In other words, controller 34 performs exit processing, which is processing for causing one or more communication devices (one or more lighting fixtures 20) to exit the mesh network.

The exit processing includes steps S47 and S48 illustrated in FIG. 6.

Controller 34 causes wireless communicator 33 to send exit information (S47), and lighting fixture 20 that receives the sent exit information exits the mesh network (S48).

Here, controller 34 controls wireless communicator 33 in the following manner to cause lighting fixtures 20c to 20e to exit the mesh network in order according to the order determined in step S46. The exit information is information for causing one target lighting fixture 20 to exit the mesh network. The exit information includes identification information that identifies the one target lighting fixture 20, and the one target lighting fixture 20 exits the mesh network when exit information including that identification signal (i.e., its own identification signal) is received.

According to the order determined in step S46, first, in step S47, controller 34 causes the exit information, in which the one target lighting fixture 20 is lighting fixture 20e, to be sent to wireless communicator 21 of lighting fixture 20a currently communicating with wireless communicator 33. Wireless communicator 21 of lighting fixture 20a sends the received exit information to lighting fixture 20e over the mesh network. As a result, the exit information is received by wireless communicator 21 of lighting fixture 20e over the mesh network.

In step S48, when the exit information is received by wireless communicator 21 of lighting fixture 20e, lighting fixture 20e exits the mesh network.

The processing of steps S47 and S48 is then repeated until all lighting fixtures 20 selected in step S43 have exited the mesh network.

In other words, wireless communicator 33 sends exit information in which the one target lighting fixture 20 is lighting fixture 20d, and lighting fixture 20d exits the mesh network. Wireless communicator 33 furthermore sends exit information in which the one target lighting fixture 20 is lighting fixture 20c, and lighting fixture 20c exits the mesh network. This causes lighting fixture 20e, lighting fixture 20d, and lighting fixture 20c to exit the mesh network in that order.

A case where lighting fixtures 20c to 20e are caused to exit in another order will be described here for reference.

A case will be described in which controller 34 causes lighting fixtures 20c to 20e to exit in order of lighting fixture 20c, lighting fixture 20d, and lighting fixture 20e, for example, without using numbers assigned according to the communication state of the plurality of communication devices.

In this case, lighting fixture 20c exits the mesh network first. As described above, once lighting fixture 20c exits, it is no longer possible for exit information for causing lighting fixture 20d to exit the mesh network to be sent from lighting fixture 20a to lighting fixture 20d over the mesh network. Likewise, once lighting fixture 20c exits, it is no longer possible for exit information for causing lighting fixture 20e to exit the mesh network to be sent from lighting fixture 20a to lighting fixture 20e over the mesh network. This makes it difficult to cause lighting fixtures 20d and 20e to exit.

However, in the present embodiment, controller 34 causes lighting fixtures 20c to 20e to exit the mesh network in the order determined in step S46. Specifically, controller 34 causes lighting fixtures 20 to exit the mesh network in order from lighting fixture 20, among the one or more communication devices to exit the mesh network (lighting fixtures 20c to 20e), for which the absolute value of the difference in number from the communication device currently communicating (lighting fixture 20a) is greatest. In other words, controller 34 causes lighting fixtures 20 to exit in order from lighting fixture 20, among the one or more communication devices (lighting fixtures 20c to 20e), which is located furthest away from the communication device currently communicating. To describe further, controller 34 causes lighting fixtures 20 to exit the mesh network in order from the communication device (lighting fixture 20) corresponding to the node at the end of the mesh network.

Accordingly, the exit information for causing lighting fixture 20d to exit the mesh network is easily sent from lighting fixture 20a to lighting fixture 20d via lighting fixture 20c, unlike when lighting fixtures 20c to 20e exit in the other order described above. Likewise, exit information for causing lighting fixture 20e to exit the mesh network is easily sent from lighting fixture 20a to lighting fixture 20e via lighting fixture 20c. This enables lighting fixtures 20d and 20e to exit the mesh network with ease. In other words, control device 30 which enables communication devices (lighting fixtures 20) to exit the mesh network reliably and easily is realized.

Although the foregoing Example 1 is an example in which all of lighting fixtures 20c to 20e receive exit information and exit the mesh network, the configuration is not limited thereto. A case in which lighting fixture 20 that received the exit information (e.g., lighting fixture 20c) cannot exit the mesh network due to some anomaly or the like, for example, will be described next. In other words, in this case, among the one or more communication devices for which the exit processing has been performed (here, lighting fixtures 20c to 20e), there is a communication device that remains on the mesh network because it cannot receive the exit information due to a communication failure, for example (lighting fixture 20c).

In this case, controller 34 causes wireless communicator 33 to communicate directly (i.e., not over the mesh network) with the communication device that remains on the mesh network (lighting fixture 20c), and causes the remaining lighting fixture 20c to exit the mesh network. Controller 34 cuts off the communication of the one lighting fixture 20a currently communicating with wireless communicator 33, and causes wireless communicator 33 to communicate with the communication device remaining on the mesh network (lighting fixture 20c) without going through the mesh network.

Controller 34 then causes exit information to be sent directly to wireless communicator 21 of lighting fixture 20c currently communicating with wireless communicator 33. As a result, a communication device remaining on the mesh network (lighting fixture 20c) can be caused to exit the mesh network.

This processing will be described next.

FIG. 8A is a flowchart illustrating Variation 1 on Example 1 of the present embodiment.

The flowchart in FIG. 8A illustrates processing performed after step S47 of FIG. 6.

After the processing of step S47 is performed, controller 34 determines whether wireless communicator 33 has received exit response information from lighting fixture 20 that received the exit information in step S47 (S49). Lighting fixture 20 that received the exit information in step S47 (i.e., the one target lighting fixture 20) sends the exit response information to wireless communicator 33 after receiving exit information including its own identification signal but before exiting the mesh network. The exit response information is information indicating that the one target lighting fixture 20 is to exit the mesh network. The exit response information is also information indicating that the one target lighting fixture 20 has completed preparations for exiting the mesh network.

If wireless communicator 33 has received the exit response information (Yes in S49), step S48 in FIG. 6 is performed.

If wireless communicator 33 has not received the exit response information (No in S49), controller 34 determines that there is a lighting fixture 20 remaining on the mesh network (e.g., lighting fixture 20c). In this case, controller 34 causes wireless communicator 33 and lighting fixture 20c to communicate directly, and causes the remaining lighting fixture 20c to exit the mesh network (S50). More specifically, controller 34 can cause the exit information to be sent directly to wireless communicator 21 of lighting fixture 20c currently communicating with wireless communicator 33, and cause lighting fixture 20c to exit the mesh network.

Processing different from Variation 1 on Example 1, illustrated in FIG. 8A, will be described next as Variation 2 on Example 1.

FIG. 8B is a flowchart illustrating Variation 2 on Example 1 of the present embodiment.

The flowchart in FIG. 8B illustrates processing performed after step S47 of FIG. 6.

If wireless communicator 33 has not received the exit response information after the processing of step S47 is performed (No in S49), controller 34 stops the processing. Here, "No" in step S49 corresponds to a case where wireless communicator 33 has not received the exit response information from a currently-processing communication device, which is a communication device for which the exit processing is currently being performed (e.g., any one of lighting fixtures 20). In this case, controller 34 stops the exit processing including and following the exit processing for the currently-processing communication device. More specifically, controller 34 stops the exit processing currently being executed for the currently-processing communication device, and the exit processing for one or more communication devices other than the currently-processing communication device which is expected to be executed after the exit processing currently being executed for the currently-processing communication device. For example, if lighting fixture 20 that received the exit information in step S47 (the currently-processing communication device) has been accidentally turned off, that lighting fixture 20 cannot send the exit response information, and wireless communicator 33 does not receive the exit response information (i.e., No in step S49). In this case, if, for example, the processing of step S50 in FIG. 8A is performed, that lighting fixture 20 exiting the mesh network will cut off the path of the mesh network. As a result, if other lighting fixtures 20 are to exit the mesh network after the stated lighting fixture 20 exits, it will be difficult for controller 34 to cause those lighting fixtures 20 to exit the mesh network in order from lighting fixture 20 corresponding to the node at the end of the mesh network.

Accordingly, if wireless communicator 33 has not received the exit response information (No in S49), the processing may be stopped (more specifically, paused), and the processing of step S47 may be performed again after a predetermined length of time, i.e., one hour, has passed, or after lighting fixture 20 (the currently-processing communication device) has been turned on. Through this, control device 30 can make it easy for a communication device (lighting fixture 20) to exit the mesh network.

Meanwhile, if wireless communicator 33 has received the exit response information (Yes in S49), step S48 in FIG. 6 is performed.

Incidentally, the exit response information used in Variation 1 and Variation 2 of Example 1 may also be used in Example 1. In this case, in Example 1, the exit response information from lighting fixtures 20d and 20e is sent to control device 30 via lighting fixture 20c, and thus control device 30 can determine whether lighting fixtures 20d and 20e have successfully exited the mesh network.

In Example 1, the numbers are determined in order from the strongest received signal strength indicated in the communication state in step S45, but the method for determining the numbers is not limited thereto.

For example, in Example 1, the following processing may be performed instead of step S45.

FIG. 9 is a flowchart illustrating Variation 3 on Example 1 of the present embodiment.

The flowchart in FIG. 9 illustrates processing performed after step S44 of FIG. 6.

Based on the communication paths indicated in the communication state, controller 34 determines the number for each of the one or more communication devices (the one or more lighting fixtures 20) to exit the mesh network in order from the communication device having the longest communication distance from the one communication device currently communicating with wireless communicator 33 (lighting fixture 20a) (S45a). Here, the communication state is the communication state of the plurality of lighting fixtures 20 that have already joined the mesh network, and indicates the state of the communication paths among the plurality of communication devices (the plurality of lighting fixtures 20) in the mesh network. As one example, a communication path is a path which indicates which lighting fixture 20 and which other lighting fixtures are capable of communicating over the mesh network, as indicated by the broken lines in FIG. 5. As described above, the communication paths (i.e., the path state) are stored in storage 35, and controller 34 performs the processing of step S45a based on the stored path states.

The processing of step S45a will be described in detail next.

Controller 34 determines the number for each of the plurality of lighting fixtures 20 such that the numerical value thereof is higher in order from lighting fixture 20 having a longer communication path. In other words, controller 34 determines the number for each of the plurality of lighting fixtures 20 such that the numerical value thereof is higher in order from lighting fixture 20 having a greater number of hops from lighting fixture 20a that is currently communicating. The "number of hops" is a value indicating how many nodes, including the destination, are traversed in the path of the mesh network, with the number of hops between adjacent nodes being "1". For example, the number of hops from lighting fixture 20a to lighting fixture 20b is "1". The number of hops from lighting fixture 20a to lighting fixture 20d, and the number of hops from lighting fixture 20a to lighting fixture 20e, is "2". If the number of hops is the same, the number for each of the plurality of lighting fixtures 20 may be determined according to a first rule. For example, the first rule is a rule stating that when the number of hops is the same value, the number is determined for each of the plurality of lighting fixtures 20 in descending order such that the numerical value thereof is highest for lighting fixture 20 at an installation position furthest from lighting fixture 20a currently communicating.

Once the processing of step S45a is complete, the processing of steps S46 to S48 is performed.

In this case too, as in Example 1 described above, controller 34 causes the one or more communication devices that are to exit the mesh network (lighting fixtures 20c to 20e) to exit in order from lighting fixture 20 located furthest from the communication device currently communicating with wireless communicator 33 (lighting fixture 20a). In other words, controller 34 causes lighting fixtures 20 to exit the mesh network in order from the communication device (lighting fixture 20) corresponding to the node at the end of the mesh network. In other words, control device 30 which enables communication devices (lighting fixtures 20) to exit the mesh network easily is realized.

### Example 2

Example 2 will be described next. The following will mainly describe the differences from Example 1, and descriptions of common points will be omitted or simplified.

In step S15 of Example 1, wireless communicator 33 receives a beacon signal from all of the plurality of lighting fixtures 20, i.e., all five lighting fixtures 20a to 20e. In other words, wireless communicator 33 receives a beacon signal from all of the plurality of lighting fixtures 20 in a single scan. However, the configuration is not limited thereto. Example 2 will describe a case where there are a large number of lighting fixtures 20, and it is therefore difficult for wireless communicator 33 to receive the beacon signal from all lighting fixtures 20 in a single scan.

### First Joining Processing

FIG. 10 is a sequence chart illustrating the first joining processing according to Example 2 of the present embodiment.

In Example 2, as in Example 1, the processing of steps S11 and S12 is performed first.

The map image included in the joining setting screen displayed in display 32 in step S12 is as illustrated in FIG. 11. FIG. 11 is a diagram illustrating an example of the map image according to Example 2 of the present embodiment. This map image is a diagram showing the interior space where the plurality of lighting fixtures 20 are installed from above, for example. In the example in FIG. 11, the installation positions of the plurality of lighting fixtures 20 are indicated by circles. As illustrated in FIG. 11, in Example 2, there are 48 lighting fixtures 20.

The processing of steps S13 and S14 is then performed. Because there are a large number of lighting fixtures 20 as described above, in step S13, operation acceptor 31 accepts the scan range setting operation so that between ten and twenty lighting fixtures 20 are scanned, for example. Note that the number of lighting fixtures 20 that are scanned at one time is not limited thereto, and may be one or more, 100 or less, or the like.

In addition, controller 34 performs the processing of step S15, i.e., the reception processing. FIG. 12 is a map image illustrating a first scan range according to Example 2 of the present embodiment. As illustrated in FIG. 12, wireless communicator 33 receives the beacon signals from the plurality of lighting fixtures 20 (12 lighting fixtures 20) installed within the scan range set in the scan range setting operation of step S13. In other words, wireless communicator 33 receives a beacon signal from at least some of the 48 lighting fixtures 20 (i.e., from 12 lighting fixtures 20).

The processing of steps S16 to S24 is then performed. As a result, for example, the installation position of one lighting fixture 20 is associated with the identification information of that one lighting fixture 20. Furthermore, the processing of steps S18 to S24 is repeated until all the icons (identification information) displayed in step S17 are associated with installation positions. As a result, the installation position and identification information are associated with each other for all of the plurality of lighting fixtures 20 installed within the scan range set in the scan range setting operation of step S13 (that is, the 12 lighting fixtures 20).

Furthermore, in Example 2, the processing of step S45 is performed. In other words, controller 34 determines the number for each of the plurality of lighting fixtures 20 in order from the strongest received signal strength indicated in the communication state of the plurality of lighting fixtures 20. As a result, "1" to "12" are determined as the respective numbers of the 12 lighting fixtures 20, as illustrated in FIG. 12. The plurality of numbers determined may be stored in storage 35.

Because the beacon signals of all lighting fixtures 20 could not be received in step S15, the processing of steps S13 to S24 and step S45 is performed again after the user in possession of control device 30 changes their location.

FIG. 13 is a map image illustrating the second scan range according to Example 2 of the present embodiment, and FIG. 14 is a map image illustrating the third scan range according to Example 2 of the present embodiment.

By performing the processing of steps S13 to S24 and step S45 multiple times, the installation position and the identification information are associated with each other for each of lighting fixtures 20 desired by the user (here, 40 lighting fixtures 20), and the numbers thereof are further determined.

For simplicity, hereinafter, lighting fixture 20 having the number "3" may be referred to as lighting fixture 20 ("3"), and lighting fixture 20 having the number "4" as lighting fixture 20 ("4"). As illustrated in FIG. 13, lighting fixture 20 ("3") and lighting fixture 20 ("4") are present in the second scan range. Accordingly, the second time step S15 is performed, the beacon signals sent from lighting fixture 20 ("3") and lighting fixture 20 ("4") are received by wireless communicator 33. However, because the numbers are already determined for lighting fixture 20 ("3") and lighting fixture 20 ("4") the first time step S45 is performed, the numbers are not determined again the second time step S45 is performed.

The second time the processing of step S45 is performed, the numbers may be determined so as to be a continuation from the numbers determined the first time the processing of step S45 was performed. In other words, because the numbers up to "12" were determined the first time the processing of step S45 was performed, the numbers from "13" and on may be determined the second time the processing of step S45 is performed. The same applies to the third time step S45 is performed.

As illustrated in FIGS. 10 to 14, controller 34 performs step S15, i.e., the reception processing, a plurality of times in order to cause the plurality of communication devices (the plurality of lighting fixtures 20) to join the mesh network in sequence. In Example 2, the following processing may be performed if, in an nth instance of the reception processing (where n is an integer of 2 or more), wireless communicator 33 has not received an identification signal from a communication device (lighting fixture 20) from which an identification signal was received by wireless communicator 33 at or before an n -1th instance of the reception processing. In this case, controller 34 cancels the processing for causing the plurality of communication devices (the plurality of lighting fixtures 20) to join the mesh network in sequence.

The following will describe a case where n is 2, for example.

FIG. 15 is a flowchart illustrating the first joining processing according to Example 2 of the present embodiment in more detail.

Controller 34 determines whether wireless communicator 33 has received an identification signal from lighting fixture 20 from which an identification signal was received by wireless communicator 33 in the second instance of the reception processing, i.e., the second time step S15 was performed (S15a).

Lighting fixture 20 ("3") corresponds to lighting fixture 20 for which an identification signal was received by wireless communicator 33 in an instance of the reception processing at or before the n-1th time (and more specifically, the first time). Accordingly, controller 34 makes a determination of Yes in step S15a if, in the second instance of the reception processing, wireless communicator 33 is receiving an identification signal from lighting fixture 20 ("3"), for example.

If controller 34 makes a determination of Yes in step S15a, controller 34 performs the processing of step S16.

For example, controller 34 makes a determination of No in step S15a if, in the second instance of the reception processing, wireless communicator 33 has not received an identification signal from lighting fixture 20 from which an identification signal was received by wireless communicator 33 in the first instance of the reception processing (e.g., lighting fixture 20 ("3")). If a determination of No is made in step S15a, controller 34 cancels the processing for causing the plurality of lighting fixtures 20 to join the mesh network in sequence. In other words, the processing from step S16 on is not performed.

If the processing for causing the plurality of lighting fixtures 20 to join the mesh network in sequence is canceled, the processing of steps S13 to S24 and step S45 may be performed again after the user in possession of control device 30 changes their location, for example.

By performing such processing, the first joining processing is canceled if the scan range at or before the n-1th time and the scan range at the nth time do not overlap. In other words, this processing prevents the occurrence of lighting fixtures 20 for which the first joining processing has been performed but which cannot communicate over the mesh network. If there are lighting fixtures 20 for which the first joining processing has been performed but which cannot communicate over the mesh network, it is necessary to perform the mesh network joining processing again. This processing can therefore efficiently cause the plurality of lighting fixtures 20 (i.e., the plurality of communication devices) to join the mesh network.

### Second Joining Processing

Furthermore, the second joining processing is performed. This will be described with reference to FIG. 4.

The processing of steps S31 to S33 is performed, as described in Example 1. Here, by performing the processing of steps S31 to S33 for all 40 lighting fixtures 20 for which the first joining processing has been performed, the 40 lighting fixtures 20 join the mesh network.

### Initialization Processing

Furthermore, the initialization processing is performed.

FIG. 16 is a sequence chart illustrating the initialization processing according to Example 2 of the present embodiment.

The processing of steps S41 to S44 is performed, as described in Example 1. The map image included in the exit setting screen displayed in display 32 in step S42 is as illustrated in FIG. 17. FIG. 17 is a diagram illustrating an example of the map image according to Example 2 of the present embodiment. Like the map image illustrated in FIG. 7 and described in Example 1, this map image is a diagram showing the interior space where the plurality of lighting fixtures 20 are installed from above, for example.

For example, in step S43, of the plurality of lighting fixtures 20, operation acceptor 31 accepts an exit selection operation instructing 32 lighting fixtures 20, having numbers "3" to "4", "9" to "10", and "13" to "40", to exit. In the map image illustrated in FIG. 17, the circles (icons) that were tapped in the exit selection operation of step S43 is marked with a dot. In step S44, operation acceptor 31 accepts a communication selection operation instructing lighting fixture 20 having a number of "6" to be lighting fixture 20 that communicates with wireless communicator 33.

Note that the processing of step S45 is performed in the first joining processing in Example 2, and is therefore not performed here.

Furthermore, the processing of steps S46 to S48 is performed. Controller 34 causes the lighting fixtures to exit the mesh network in order from the lighting fixture having the highest absolute value for the difference between (i) "6", which is the number determined for lighting fixture 20 currently communicating with wireless communicator 33, and (ii) the number determined for each of the 32 lighting fixtures 20 which are to exit. For example, lighting fixture 20 having number "40" exits the mesh network first, and lighting fixture 20 having number "39" exits the mesh network second.

For example, the difference in the absolute value from the number determined for the lighting fixture currently communicating with wireless communicator 33 is the same value, namely "3", for both lighting fixture 20 having a determined number of "3" and lighting fixture 20 having a determined number of "9". In such a case, where the difference in absolute values is the same for the two lighting fixtures 20, in step S46, controller 34 may determine an order in which to cause each of the one or more lighting fixtures 20 selected in step S43 to exit the mesh network, in accordance with a second rule. The second rule is a rule stating that when the difference in absolute values is the same for two lighting fixtures 20, those lighting fixtures 20 are caused to exit the mesh network in order from lighting fixture 20 which is at an installation position further from lighting fixture 20 currently communicating with wireless communicator 33. The second rule is not limited thereto, however.

Through the foregoing, in Example 2 as well, like Example 1, controller 34 causes the one or more lighting fixtures 20 that are to exit the mesh network to exit in order from lighting fixture 20 installed at a position furthest from lighting fixture 20 currently communicating with wireless communicator 33. Accordingly, when there are a large number of lighting fixtures 20 as in Example 2, control device 30 which enables communication devices (lighting fixtures 20) to exit the mesh network easily is realized.

### Example 3

Example 3 will be described next. The following will mainly describe the differences from Example 2, and descriptions of common points will be omitted or simplified.

Like Example 2, Example 3 will describe a case where there are a large number of lighting fixtures 20, and it is therefore difficult for wireless communicator 33 to receive the beacon signal from all lighting fixtures 20 in a single scan.

### First Joining Processing

This will be described with reference to FIG. 10.

In Example 3, as in Example 2, the processing of steps S11 and S12 is performed first.

The map image included in the joining setting screen displayed in display 32 in step S12 is as illustrated in FIG. 18. FIG. 18 is a diagram illustrating an example of the map image according to Example 3 of the present embodiment. This map image is a diagram showing the interior space where the plurality of lighting fixtures 20 are installed from above, for example. In the example in FIG. 18, the installation positions of the plurality of lighting fixtures 20 are indicated by circles. As illustrated in FIG. 18, in Example 3, there are 52 lighting fixtures 20. Note that seven of lighting fixtures 20 of the 52 lighting fixtures shown in FIG. 18 will be referred to as lighting fixtures 20g, 20h, 20j, 20k, 20m, 20n, and 20p for the purpose of identification.

The processing of steps S13 and S14 is then performed. Because there are a large number of lighting fixtures 20 as described above, in step S13, operation acceptor 31 accepts the scan range setting operation so that between ten and twenty lighting fixtures 20 are scanned, for example.

In addition, controller 34 performs the processing of step S15, i.e., the reception processing. As illustrated in FIG. 18, wireless communicator 33 receives the beacon signals from the plurality of lighting fixtures 20 (12 lighting fixtures 20) installed within the scan range set in the scan range setting operation of step S13 (the first scan range).

The processing of steps S16 to S24 is then performed. As a result, for example, the installation position of one lighting fixture 20 is associated with the identification information of that one lighting fixture 20. Furthermore, the processing of steps S18 to S24 is repeated until all the icons (identification information) displayed in step S17 are associated with installation positions. As a result, the installation position and identification information are associated with each other for all of the plurality of lighting fixtures 20 installed within the scan range set in the scan range setting operation of step S13 (that is, the 12 lighting fixtures 20).

Furthermore, in Example 3, the processing of step S45 is performed. In other words, controller 34 determines the number for each of the plurality of lighting fixtures 20 in order from the strongest received signal strength indicated in the communication state of the plurality of lighting fixtures 20. As a result, "1" to "12" are determined as the respective numbers of the 12 lighting fixtures 20, as illustrated in FIG. 18. The plurality of numbers determined may be stored in storage 35.

As in Example 2, because the beacon signals of all lighting fixtures 20 could not be received in step S15, the processing of steps S13 to S24 and step S45 is performed again after the user in possession of control device 30 changes their location.

FIG. 18 indicates second and third scan ranges, i.e., a second instance of the reception processing and a third instance of the reception processing are performed. As a result, "13" to "40" are determined as the numbers for the 28 lighting fixtures 20 installed within the second and third scan ranges.

Furthermore, in Example 3, the following processing is performed to associate the installation positions and identification information of each of the four lighting fixtures 20g to 20k with each other. In other words, first, after the processing of steps S13 and S14 is performed, the fourth instance of the processing of step S15, i.e., the fourth instance of the reception processing, is performed.

In this fourth instance of the reception processing, wireless communicator 33 receives a beacon signal (identification signal) from each of the seven lighting fixtures 20g to 20p. In addition, lighting fixture 20n having the number "5" is assumed to be lighting fixture 20, among lighting fixtures 20n, 20m, and 20p having the numbers "5", "10", and 11", respectively, that outputs the identification signal having the strongest received signal strength.

Here, of the one or more communication devices that output an identification signal in the nth (the fourth, here) instance of the reception processing, the communication device from which an identification signal was first received by wireless communicator 33 in the nth instance of the reception processing is taken as a "new communication device". Furthermore, of the one or more communication devices that output an identification signal in the nth (the fourth, here) instance of the reception processing, a communication device that satisfies the following first condition and second condition is taken as an "already-present communication device".

A communication device that satisfies the first condition is a communication device, among the one or more communication devices that output an identification signal in the nth instance of the reception processing, from which an identification signal has already been received by wireless communicator 33 at or before the n-1th (the third, here) instance of the reception processing.

A communication device that satisfies the second condition is a communication device that, of the one or more communication devices that output an identification signal in the nth instance of the reception processing, has output the identification signal having the strongest received signal strength in the nth instance of the reception processing. More specifically, a communication device that satisfies the second condition is a communication device that, with the exception of the new communication device, has output the identification signal having the strongest received signal strength in the nth instance of the reception processing.

In other words, each of the four lighting fixtures 20g to 20k corresponds to a new communication device. Lighting fixture 20n, which has a number of "5", corresponds to an already-present communication device.

Furthermore, in Example 3, the processing of step S45 is performed. In other words, controller 34 determines the number for each of the plurality of lighting fixtures 20 in order from the strongest received signal strength indicated in the communication state of the plurality of lighting fixtures 20. Here, "41", "42", "43", and "44" are determined as the numbers for the four lighting fixtures 20g to 20k, respectively. The plurality of numbers determined may be stored in storage 35.

In Example 3, controller 34 determines whether the difference between the number of the new communication device (the four lighting fixtures 20g to 20k) and the already-present communication device (lighting fixture 20n) is greater than a predetermined threshold. As one example, the predetermined threshold may be the number of communication devices from which wireless communicator 33 can receive the beacon signal in a single instance of step S15 (reception processing), but is not limited thereto. For example, the predetermined threshold may be a numerical value (threshold) indicated by an operation accepted from the user by operation acceptor 31, or may be a numerical value such as 10, 20, 30, or the like.

Here, controller 34 determines that the difference between the number of lighting fixture 20g, namely "41", and the number of lighting fixture 20n, namely "5" (i.e., a difference of 36), is greater than a predetermined value. In this case, the number "41" of lighting fixture 20g is stored in storage 35 so as to be associated with the number "5" of lighting fixture 20n. In other words, if the difference between the number of the new communication device (lighting fixture 20g) and the already-present communication device (lighting fixture 20n) is greater than the predetermined threshold, the number of the new communication device and the number of the already-present communication device are stored in association with each other in storage 35. In Example 3, the difference between the respective numbers "41" to "43" of the three lighting fixtures 20h to 20k, and the number "5" of lighting fixture 20n, is determined to be greater than a predetermined value, and similar processing is performed.

In Example 4, in the four lighting fixtures 20g to 20k, the numbers "jump" (i.e., the numbers are significantly different) between adjacent lighting fixtures 20 (e.g., lighting fixtures 20m, 20n, and 20p). The foregoing processing is performed when the numbers "jump" in such a manner. Note that the foregoing processing is not performed if the difference between the numbers of the new communication devices (the four lighting fixtures 20g to 20k) and the already-present communication device (lighting fixture 20n) is no greater than the predetermined threshold.

As described above, by performing the processing of steps S13 to S24 and step S45 multiple times, the installation position and the identification information are associated with each other for each of lighting fixtures 20 desired by the user (here, 44 lighting fixtures 20), and the numbers thereof are further determined.

### Second Joining Processing

Furthermore, the second joining processing is performed. This will be described with reference to FIG. 4.

The processing of steps S31 to S33 is performed, as described in Example 2. Here, by performing the processing of steps S31 to S33 for all 44 lighting fixtures 20 for which the first joining processing has been performed, the 44 lighting fixtures 20 join the mesh network.

### Initialization Processing

Furthermore, the initialization processing is performed. This will be described with reference to FIG. 16.

The processing of steps S41 to S44 is performed, as described in Example 2. The map image included in the exit setting screen displayed in display 32 in step S42 is as illustrated in FIG. 19. FIG. 19 is a diagram illustrating an example of the map image according to Example 3 of the present embodiment. Like the map image illustrated in FIG. 17 and described in Example 2, this map image is a diagram showing the interior space where the plurality of lighting fixtures 20 are installed from above, for example.

In step S43, of the plurality of lighting fixtures 20, operation acceptor 31 accepts an exit selection operation instructing 13 lighting fixtures 20, having numbers "1", "3", "6", "10", "11", "26", "28", "30", "33", "34", "39", "42", and "44", to exit. In step S44, operation acceptor 31 accepts a communication selection operation instructing lighting fixture 20j having a number of "43" to be lighting fixture 20 that communicates with wireless communicator 33.

Furthermore, the processing of steps S46 to S48 is performed. Controller 34 causes the lighting fixtures to exit the mesh network in order from the lighting fixture having the highest absolute value for the difference between (i) the number determined for lighting fixture 20j currently communicating with wireless communicator 33, and (ii) the number determined for each of the 13 lighting fixtures 20 which are to exit.

Here, in Example 3, the number "43" determined by controller 34, or the number "5" stored in association with the number "43" determined by controller 34, is used as the number determined for lighting fixture 20j currently communicating with wireless communicator 33.

This will be described in more detail hereinafter. FIG. 20 is a flowchart illustrating step S46 of Example 3 of the present embodiment in more detail.

Controller 34 determines whether the number "5" associated with number "43" of lighting fixture 20j currently communicating with wireless communicator 33 is the same as the number associated with the number determined for lighting fixture 20 that is to exit (S46a).

If a determination of Yes is made in step S46a, controller 34 determines to use the number determined by controller 34 in step S45 as the number determined for lighting fixture 20j currently communicating with wireless communicator 33 (S46b). In other words, if the communication devices to exit are lighting fixtures 20h and 20k, the number "43" is used as the number determined for lighting fixture 20j.

If a determination of No is made in step S46a, controller 34 determines to use the number "5" stored in association with the number "43" as the number determined for lighting fixture 20j currently communicating with wireless communicator 33 (S46c). In other words, if the communication device to exit is not lighting fixture 20h or 20k, the number "5" stored in association with the number "43" is used as the number determined for lighting fixture 20j currently communicating with wireless communicator 33. To rephrase, controller 34 uses the number determined for the already-present communication device (lighting fixture 20n) as the number determined for one communication device currently communicating with wireless communicator 33 (lighting fixture 20j).

Controller 34 then determines to cause the lighting fixtures to exit the mesh network in order from the lighting fixture having the highest absolute value for the difference between (i) the number determined for lighting fixture 20j which, among the plurality of lighting fixtures 20, is currently communicating with wireless communicator 33, and (ii) the number determined for each of the one or more lighting fixtures 20 which are to exit the mesh network (S46d). As indicated by step S46b, if the communication devices to exit are lighting fixtures 20h and 20k, the number "43" is used as the number determined for lighting fixture 20j. Furthermore, as indicated by step S46c, if the communication device to exit is not lighting fixture 20h or 20k, the number "5" stored in association with the number "43" is used as the number determined for lighting fixture 20j.

This result is shown in Table 2.

**Table 2**

| Number of lighting fixture to exit | Absolute value of difference between number of lighting fixture currently communicating and number of lighting fixture to exit | Order of exit |
|---|---|---|
| 1 | \|5 - 1\| = 4 | 9 |
| 3 | \|5 - 3\| = 2 | 10 |
| 6 | \|5 - 6\| = 1 | 11 |
| 10 | \|5 - 10\| = 5 | 8 |
| 11 | \|5 - 11\| = 6 | 7 |
| 26 | \|5 - 26\| = 21 | 6 |
| 28 | \|5 - 28\| = 23 | 5 |
| 30 | \|5 - 30\| = 25 | 4 |
| 33 | \|5 - 33\| = 28 | 3 |
| 34 | \|5 - 34\| = 29 | 2 |
| 39 | \|5 - 39\| = 34 | 1 (first) |
| 42 | \|43 - 42\| = 1 | 12 |
| 44 | \|43 - 44\| = 1 | 13 (last) |

Table 2 is a table showing the order in which lighting fixtures 20 exit the mesh network, determined in step S46.

As indicated in Table 2, controller 34 calculates that the absolute values of the differences between (i) the number of lighting fixture 20j and (ii) the numbers "42" and "44" for lighting fixtures 20h and 20k are "1" and "1", respectively. Controller 34 also calculates that the absolute value of the difference between (i) the number of lighting fixture 20j and (ii) the number "10" for lighting fixture 20m is "5". Controller 34 calculates the absolute value of the difference for the 13 lighting fixtures 20 having numbers "1", "3", "6", "11", "26", "28", "30", "33", "34", and "39" as well.

Through this, as indicated in Table 2, controller 34 causes lighting fixture 20, initially numbered "39", to exit the mesh network. Controller 34 then causes lighting fixtures 20 to exit the mesh network in sequence, with lighting fixture 20k, numbered "44", exiting the mesh network last. Note that the second rule described above may be used here as well.

In this manner, in Example 3, even if the numbers "jump", controller 34 causes the one or more lighting fixtures 20 that are to exit the mesh network to exit in order from lighting fixture 20 installed at a position furthest from lighting fixture 20 currently communicating with wireless communicator 33. Accordingly, even if the numbers "jump" as in Example 3, control device 30 which enables communication devices (lighting fixtures 20) to exit the mesh network easily is realized.

### Example 4

Example 4 will be described next. The following will mainly describe the differences from Examples 1 to 3, and descriptions of common points will be omitted or simplified.

In Examples 2 and 3, the number for lighting fixture 20 increases so as to continue from the previous number each time the processing of steps S13 to S24 and step S45 is performed. However, the configuration is not limited thereto.

Note that in Example 4, the number used in Examples 1 to 3 will be described as a "first number".

### First Joining Processing

FIG. 21 is a sequence chart illustrating the first joining processing according to Example 4 of the present embodiment.

In Example 4, as in Examples 2 and 3, the processing of steps S11 and S12 is performed first.

The map image included in the joining setting screen displayed in display 32 in step S12 is as illustrated in FIG. 22. FIG. 22 is a diagram illustrating an example of the map image according to Example 4 of the present embodiment. This map image is a diagram showing the interior space where the plurality of lighting fixtures 20 are installed from above, for example. In the example in FIG. 22, the installation positions of the plurality of lighting fixtures 20 are indicated by circles. As illustrated in FIG. 22, in Example 4, there are 48 lighting fixtures 20.

The processing of steps S13 and S14 is then performed. Because there are a large number of lighting fixtures 20 as described above, in step S13, operation acceptor 31 accepts the scan range setting operation so that between ten and twenty lighting fixtures 20 are scanned, for example.

Controller 34 then performs the processing of the first instance of step S15, i.e., the first instance of the reception processing. As illustrated in FIG. 22, wireless communicator 33 receives the beacon signals from the plurality of lighting fixtures 20 (14 lighting fixtures 20) installed within the scan range set in the scan range setting operation of step S13 (the first scan range).

The processing of steps S16 to S24 is then performed. As a result, for example, the installation position of one lighting fixture 20 is associated with the identification information of that one lighting fixture 20. Furthermore, the processing of steps S18 to S24 is repeated until all the icons (identification information) displayed in step S17 are associated with installation positions. As a result, the installation position and identification information are associated with each other for all of the plurality of lighting fixtures 20 installed within the scan range set in the scan range setting operation of step S13 (that is, the 14 lighting fixtures 20).

In Example 4, controller 34 determines a second number for each of the plurality of lighting fixtures 20 according to the number of instances of the reception processing, and determines the first number in order from the strongest received signal strength indicated in the communication state of the plurality of lighting fixtures 20 (S45b).

In other words, controller 34 determines the second number and the first number for one lighting fixture 20.

Controller 34 determines the second number for one lighting fixture 20 according to the number of instances of the reception processing, and to be more specific, takes the number of instances of the reception processing in which the beacon signal of the one lighting fixture 20 was received as the second number for that one lighting fixture 20. For example, controller 34 determines that the second number for each of the 14 lighting fixtures 20 installed within the first scan range set in the scan range setting operation of step S13 is "1".

Additionally, as described in Examples 1 to 3, controller 34 determines the first number for each of the plurality of lighting fixtures 20 in order from the strongest received signal strength indicated in the communication state of the plurality of lighting fixtures 20.

In FIG. 22, the determined second number and first number are indicated as "second number - first number" in the circles (icons) corresponding to lighting fixtures 20. In other words, "1-1" to "1-14" are determined as the second number and first number, respectively, for the 14 lighting fixtures 20, as illustrated in FIG. 22. The plurality of numbers determined may be stored in storage 35.

By performing the processing of steps S13 to S24 and step S45 multiple times, the installation position and the identification information are associated with each other for each of lighting fixtures 20 desired by the user (here, 40 lighting fixtures 20), and the numbers thereof are further determined.

As in Example 3, because the beacon signals of all lighting fixtures 20 could not be received in step S15, the processing of steps S13 to S24 and step S45 is performed again after the user in possession of control device 30 changes their location.

FIG. 22 indicates second and third scan ranges, i.e., a second instance of the reception processing and a third instance of the reception processing are performed. As a result, "2-1" to "2-10" are determined as the second number and the first number, respectively, for the 10 lighting fixtures 20 installed within the second scan range. Furthermore, "3-1" to "3-16" are determined as the second number and the first number, respectively, for the 16 lighting fixtures 20 installed within the third scan range.

The second time the processing of step S45 is performed, the first number is not determined so as to be a continuation from the first number determined the first time the processing of step S45 was performed. In other words, the first time the processing of step S45 is performed, the first number is determined from "1" to "14", but the second time the processing of step S45 is performed, the first numbers is may be determined from "1" again. The same applies to the third time step S45 is performed.

### Second Joining Processing

Furthermore, the second joining processing is performed. This will be described with reference to FIG. 4.

The processing of steps S31 to S33 is performed, as described in Example 3. Here, by performing the processing of steps S31 to S33 for all 40 lighting fixtures 20 for which the first joining processing has been performed, the 40 lighting fixtures 20 join the mesh network.

### Initialization Processing

Furthermore, the initialization processing is performed.

FIG. 23 is a sequence chart illustrating the initialization processing according to Example 4 of the present embodiment.

The processing of steps S41 to S44 is performed, as described in Example 3. The map image included in the exit setting screen displayed in display 32 in step S42 is as illustrated in FIG. 24. FIG. 24 is a diagram illustrating an example of the map image according to Example 4 of the present embodiment. Like the map image illustrated in FIG. 19 and described in Example 3, this map image is a diagram showing the interior space where the plurality of lighting fixtures 20 are installed from above, for example.

For example, in step S43, of the plurality of lighting fixtures 20, operation acceptor 31 accepts an exit selection operation instructing 32 lighting fixtures 20, for which the second numbers and first numbers are "1-3" to "1-4", "1-9" to "1-10", "1-13" to "1-14", "2-1" to "2-10", and "3-1" to "3-16", to exit. In the map image illustrated in FIG. 24, the circles (icons) that were tapped in the exit selection operation of step S43 is marked with a dot. In step S44, operation acceptor 31 accepts a communication selection operation instructing lighting fixture 20 having a number of "1-6" (sometimes referred to as "lighting fixture 20 ("1-6") hereinafter) to be lighting fixture 20 that communicates with wireless communicator 33.

Controller 34 determines an order in which to cause each of the one or more lighting fixtures 20 selected in step S43 to exit the mesh network. Here, controller 34 determines to cause the one or more lighting fixtures 20 to exit the mesh network in an order that satisfies the first condition and the second condition (S46f).

An order that satisfies the first condition is an order from the highest absolute value for the difference between (i) the second number, which is the number determined for lighting fixture 20, among the plurality of lighting fixtures 20, currently communicating with wireless communicator 33, and (ii) the second number determined for each of the one or more lighting fixtures 20 which are to exit the mesh network. Note that among the plurality of lighting fixtures 20, lighting fixture 20 currently communicating with wireless communicator 33 is lighting fixture 20 ("1-6"). In other words, the second number determined for lighting fixture 20 currently communicating is "1".

The one or more lighting fixtures 20 that are to exit the mesh network include 16 lighting fixtures 20 for which the second number is "3", ten lighting fixtures 20 for which the second number is "2", and four lighting fixtures 20 for which the second number is "1". As such, according to the first condition, controller 34 causes the 16 lighting fixtures 20 for which the second number is "3", the ten lighting fixtures 20 for which the second number is "2", and the four lighting fixtures 20 for which the second number is "1" to exit the mesh network in that order.

Furthermore, an order that satisfies the second condition is an order from the highest first number determined for each of the one or more lighting fixtures 20 that are to exit the mesh network. For example, when causing the 16 lighting fixtures 20 for which the second number is "3" to exit the mesh network, controller 34 causes the 16 lighting fixtures 20 for which the second number is "3" to exit the mesh network in order from lighting fixture 20 for which the first number is highest, according to the second condition.

Accordingly, in step S46f, controller 34 determines to cause the plurality of lighting fixtures 20 to exit the mesh network in the following order. Lighting fixtures 20 for which the determined numbers are "3-16", "3-15", "3-14", "3-13", "3-12", "3-11", "3-10", "3-9", "3-8", "3-7", "3-6", "3-5", "3-4", "3-3", "3-2", and "3-1" are caused to exit the mesh network in that order. Next, lighting fixtures 20 for which the determined numbers are "2-10", "2-9", "2-8", "2-7", "2-6", "2-5", "2-4", "2-3", "2-2", and "2-1" are caused to exit the mesh network in that order. Furthermore, lighting fixtures 20 for which the determined numbers are "1-14"", "1-13", "1-10", "1-9", "1-4", and "1-3" are caused to exit the mesh network in that order.

The processing of steps S47 and S48 is then performed. Through this, the one or more lighting fixtures 20 exit the mesh network in the order determined in step S46f.

Through the foregoing, in Example 4 as well, controller 34 causes the one or more lighting fixtures 20 that are to exit the mesh network to exit in order from lighting fixture 20 installed at a position furthest from lighting fixture 20 currently communicating with wireless communicator 33. Accordingly, when there are a large number of lighting fixtures 20 as in Example 4, control device 30 which enables communication devices (lighting fixtures 20) to exit the mesh network easily is realized.

Additionally, in Example 4, both the second number and the first number are used, which suppresses situations where the numerical value of the number rises. In other words, control device 30 is realized which can assist the user in easily managing the second number and the first number.

### Effects, etc.

Invention 1 is control device 30, which includes: controller 34 that, for each of a plurality of communication devices (lighting fixtures 20), determines a number for the communication devices according to a communication state of the communication device; and a communicator (wireless communicator 33) that communicates with the plurality of communication devices. The plurality of communication devices join a mesh network. When causing one or more communication devices among the plurality of communication devices to exit the mesh network, controller 34 performs exit processing for causing the one or more communication devices to exit the mesh network in order from a communication device for which an absolute value of a difference between (i) the number determined for one communication device (e.g., lighting fixture 20a), among the plurality of communication devices, currently communicating with the communicator (wireless communicator 33) and (ii) the number determined for each of the one or more communication devices is highest.

Note that in Invention 1, controller 34 may perform reception processing for causing the communicator (wireless communicator 33) to receive an identification signal which is output from and identifies each of the plurality of communication devices (lighting fixtures 20), to cause the plurality of communication devices to join the mesh network. The communication state may indicate a received signal strength of each of a plurality of identification signals received by the communicator (wireless communicator 33), each being the identification signal received by the communicator. Controller 34 may determine the number in order from the received signal strength that is strongest.

Additionally, in Invention 1, the communication state may indicate a path state, the path state indicating communication paths among the plurality of communication devices (lighting fixtures 20) in the mesh network, and based on the communication paths indicated by the communication state, controller 34 may determine the number in order from a communication device for which a communication distance from the one communication device currently communicating with the communicator (wireless communicator 33) is longest.

Through this, as in Example 1, controller 34 causes the one or more communication devices that are to exit the mesh network (lighting fixtures 20c to 20e) to exit in order from lighting fixture 20 located furthest from the communication device currently communicating with wireless communicator 33 (lighting fixture 20a). In other words, controller 34 causes lighting fixtures 20 to exit the mesh network in order from the communication device (lighting fixture 20) corresponding to the node at the end of the mesh network. This enables lighting fixtures 20d and 20e to exit the mesh network with ease, for example. In other words, control device 30 which enables communication devices (lighting fixtures 20) to exit the mesh network easily is realized.

Invention 2 is control device 30 according to Invention 1, wherein controller 34 performs reception processing for causing the communicator (wireless communicator 33) to receive an identification signal which is output from and identifies each of the plurality of communication devices (lighting fixtures 20), to cause the plurality of communication devices to join the mesh network; the communication state indicates a received signal strength of each of a plurality of identification signals received by the communicator (wireless communicator 33), each being the identification signal received by the communicator; and controller 34 determines the number in order from the received signal strength that is strongest.

Through this, as in Example 1, control device 30 which enables communication devices (lighting fixtures 20) to exit the mesh network easily is realized.

Invention 3 is control device 30 according to Invention 2, wherein controller 34 performs a plurality of instances of the reception processing to cause the plurality of communication devices (lighting fixtures 20) to join the mesh network in sequence; and when, in an nth instance of the reception processing, the communicator (wireless communicator 33) has not received the identification signal from a communication device from which the communicator (wireless communicator 33) received the identification signal at or before an n-1th instance of the reception processing, the communicator (wireless communicator 33) cancels processing for causing the plurality of communication devices to join the mesh network in sequence, n being an integer of 2 or more.

Through this, as in Example 2, the plurality of lighting fixtures 20 can be caused to join the mesh network efficiently.

Invention 4 is control device 30 according to Invention 3, wherein of one or more of the communication devices (lighting fixtures 20) that has output the identification signal in the nth instance of the reception processing, a communication device from which the identification signal is first received by the communicator (wireless communicator 33) in the nth instance of the reception processing is taken as a new communication device (e.g., the four lighting fixtures 20g to 20k), and a communication device from which the identification signal has already been received by the communicator (wireless communicator 33) at or before the n-1th instance of the reception processing, and which in the nth instance of the reception processing has output the identification signal having the received signal strength that is strongest, is taken as an already-present communication device (e.g., lighting fixture 20n). When controller 34 performs the exit processing, when a difference between the number determined for the already-present communication device and the number determined for the new communication device is greater than a predetermined threshold, and the one communication device currently communicating with the communicator (wireless communicator 33) is the new communication device, controller 34 uses the number determined for the already-present communication device as the number determined for the one communication device.

Through this, even if the numbers "jump" as in Example 3, control device 30 which enables communication devices (lighting fixtures 20) to exit the mesh network easily is realized.

Invention 5 is control device 30 according to Invention 1, wherein the communication state indicates a path state, the path state indicating communication paths among the plurality of communication devices (lighting fixtures 20) in the mesh network; and based on the communication paths indicated by the communication state, controller 34 may determine the number in order from a communication device for which a communication distance from the one communication device currently communicating with the communicator (wireless communicator 33) is longest.

Through this, as in Variation 3 on Example 1, control device 30 which enables communication devices (lighting fixtures 20) to exit the mesh network easily is realized.

Invention 6 is control device 30 according to any one of Inventions 1 to 5, wherein when a communication device, among the one or more communication devices for which the exit processing has been performed, remains on the mesh network, controller 34 causes the communicator (wireless communicator 33) and the communication device that remains to communicate with each other without involving the mesh network to cause the communication device that remains to exit the mesh network.

Through this, as in Variation 1 on Example 1, even if there is lighting fixture 20 which cannot exit the mesh network due to an anomaly or the like (e.g., lighting fixture 20c), that lighting fixture 20 can be caused to exit the mesh network. In other words, control device 30 which enables communication devices (lighting fixtures 20) to exit the mesh network easily is realized.

Invention 7 is control device 30 according to any one of Inventions 1 to 5, wherein when controller 34 performs the exit processing for the one or more communication devices (lighting fixtures 20) according to the order: if the communicator (wireless communicator 33) has not received, from a currently-processing communication device, exit response information indicating that the currently-processing communication device is to exit the mesh network, the currently-processing communication device being one communication device among the one or more communication devices for which the exit processing is being performed, controller 34 stops the exit processing for the currently-processing communication device and skips the exit processing for each remaining communication device among the one or more communication devices.

Through this, as in Variation 2 on Example 1, control device 30 which can enable communication devices (lighting fixtures 20) to exit the mesh network easily is realized.

Invention 8 is control device 30 according to Invention 1, wherein the number is a first number; when performing a plurality of instances of reception processing for causing the communicator (wireless communicator 33) to receive an identification signal which is output from and identifies each of the plurality of communication devices (lighting fixtures 20), to cause the plurality of communication devices to join the mesh network in sequence, controller 34 determines a second number for each of the plurality of communication devices according to a total number of instances of the reception processing; and when causing the one or more communication devices among the plurality of communication devices to exit the mesh network, controller 34 causes the one or more communication devices to exit the mesh network in order from a communication device for which an absolute value of a difference between (i) the second number determined for the one communication device, among the plurality of communication devices, currently communicating with the communicator (wireless communicator 33) and (ii) the second number determined for each of the one or more communication devices is highest, and for which the first number determined for each of the one or more communication devices is highest.

Through this, when there are a large number of lighting fixtures 20 as in Example 4, control device 30 which enables communication devices (lighting fixtures 20) to exit the mesh network easily is realized.

Invention 9 is control device 30 according to any one of Inventions 1 to 8, wherein each of the plurality of communication devices is lighting fixture 20.

Through this, control device 30 in which each of the plurality of communication devices is lighting fixture 20 is realized.

Invention 10 is a control method executed by control device 30. Control device 30 includes controller 34r and a communicator (wireless communicator 33) that communicates with a plurality of communication devices (lighting fixtures 20), and the plurality of communication devices join a mesh network. The control method includes: determining, by controller 34, for each of a plurality of communication device, a number for the communication device according to a communication state of the communication device; and when causing one or more communication devices among the plurality of communication devices to exit the mesh network, performing, by controller 34, exit processing for causing the one or more communication devices to exit the mesh network in order from a communication device for which an absolute value of a difference between (i) the number determined for one communication device, among the plurality of communication devices, currently communicating with the communicator (wireless communicator 33) and (ii) the number determined for each of the one or more communication devices is highest.

Through this, as in Example 1, a control method which enables communication devices (lighting fixtures 20) to exit the mesh network easily is realized.

### Other Embodiments

Although embodiments have been described thus far, the present disclosure is not limited to the foregoing embodiments.

For example, in the foregoing embodiments, a MAC address is described as an example of the identification information, but the identification information may be any information which enables the lighting fixture to be uniquely identified, and is not limited to a MAC address.

Additionally, the method through which the devices communicate with each other described in the foregoing embodiments is merely one example. The method through which the devices communicate with each other is not particularly limited.

In the initialization processing in Example 1, wireless communicator 33 sequentially sends exit information in which the one target lighting fixture 20 is lighting fixture 20e, exit information in which the one target lighting fixture 20 is lighting fixture 20d, and exit information in which the one target lighting fixture 20 is lighting fixture 20c. For example, the timing at which the exit information is sent may be as follows. When wireless communicator 33 receives the exit response information sent from lighting fixture 20e, controller 34 may cause wireless communicator 33 to send the exit information in which the one target lighting fixture 20 is lighting fixture 20d. Likewise, when wireless communicator 33 receives the exit response information sent from lighting fixture 20d, controller 34 may cause wireless communicator 33 to send the exit information in which the one target lighting fixture 20 is lighting fixture 20c. This makes it possible to more reliably cause lighting fixture 20e, lighting fixture 20d, and lighting fixture 20c to exit the mesh network in that order.

Additionally, processing executed by a specific processing unit in the foregoing embodiments may be executed by a different processing unit. Additionally, the order of multiple processes may be changed, and multiple processes may be executed in parallel.

Additionally, in the foregoing embodiment, the constituent elements such as the controller and the like may be implemented by executing software programs corresponding to those constituent elements. Each constituent element may be realized by a program executing unit such as a CPU or a processor reading out and executing a software program recorded into a recording medium such as a hard disk or semiconductor memory.

Constituent elements such as controllers may be implemented by hardware. For example, constituent elements such as controllers may be circuitry (or integrated circuitry). This circuitry may constitute a single overall circuit, or may be separate circuits. The circuitry may be generic circuitry, or may be dedicated circuitry.

The general or specific aspects of the present disclosure may be implemented by a system, a device, a method, an integrated circuit, a computer program, or a computer-readable recording medium such as a CD-ROM. These forms may also be implemented by any desired combination of systems, devices, methods, integrated circuits, computer programs, and recording media. For example, the present disclosure may be realized as a communication system or an information terminal according to the foregoing embodiments, or as an information processing method executed by an information terminal. The present disclosure may be implemented as a program for causing a computer to execute such an information processing method, or as a non-transitory recording medium having such a program recorded thereon. Such a program includes an application program for causing a computer, such as a general-purpose information terminal or the like, to function as an information terminal according to the foregoing embodiments.

Note that embodiments resulting from variations of the above embodiments arrived at by those skilled in the art, as well as embodiments resulting from optional combinations of elements and functions in the above embodiments are included within the present disclosure as long as the embodiments do not depart from the scope of the present disclosure.

### Reference Signs List

20, 20a, 20b, 20c, 20d, 20e, 20g, 20h, 20j, 20k, 20m, 20n, 20p Lighting fixture
30 Control device
34 Controller

## Claims

1. A control device comprising:
a controller that, for each of a plurality of communication devices, determines a number for the communication devices according to a communication state of the communication device; and
a communicator that communicates with the plurality of communication devices,
wherein the plurality of communication devices join a mesh network, and
when causing one or more communication devices among the plurality of communication devices to exit the mesh network, the controller performs exit processing for causing the one or more communication devices to exit the mesh network in order from a communication device for which an absolute value of a difference between (i) the number determined for one communication device, among the plurality of communication devices, currently communicating with the communicator and (ii) the number determined for each of the one or more communication devices is highest.

2. The control device according to claim 1,
wherein the controller performs reception processing for causing the communicator to receive an identification signal which is output from and identifies each of the plurality of communication devices, to cause the plurality of communication devices to join the mesh network,
the communication state indicates a received signal strength of each of a plurality of identification signals received by the communicator, each being the identification signal received by the communicator, and
the controller determines the number in order from the received signal strength that is strongest.

3. The control device according to claim 2,
wherein the controller performs a plurality of instances of the reception processing to cause the plurality of communication devices to join the mesh network in sequence, and
when, in an nth instance of the reception processing, the communicator has not received the identification signal from a communication device from which the communicator received the identification signal at or before an n-1th instance of the reception processing, the communicator cancels processing for causing the plurality of communication devices to join the mesh network in sequence, n being an integer of 2 or more.

4. The control device according to claim 3,
wherein of one or more of the communication devices that has output the identification signal in the nth instance of the reception processing,
a communication device from which the identification signal is first received by the communicator in the nth instance of the reception processing is taken as a new communication device, and
a communication device from which the identification signal has already been received by the communicator at or before the n-1th instance of the reception processing, and which in the nth instance of the reception processing has output the identification signal having the received signal strength that is strongest, is taken as an already-present communication device, and
when the controller performs the exit processing,
when a difference between the number determined for the already-present communication device and the number determined for the new communication device is greater than a predetermined threshold, and the one communication device currently communicating with the communicator is the new communication device,
the controller uses the number determined for the already-present communication device as the number determined for the one communication device.

5. The control device according to one of the preceding claims,
wherein the communication state indicates a path state, the path state indicating communication paths among the plurality of communication devices in the mesh network, and
based on the communication paths indicated by the communication state, the controller determines the number in order from a communication device for which a communication distance from the one communication device currently communicating with the communicator is longest.

6. The control device according to one of the preceding claims,
wherein when a communication device, among the one or more communication devices for which the exit processing has been performed, remains on the mesh network, the controller causes the communicator and the communication device that remains to communicate with each other without involving the mesh network to cause the communication device that remains to exit the mesh network.

7. The control device according to one of the preceding claims,
wherein when the controller performs the exit processing for the one or more communication devices according to the order,
if the communicator has not received, from a currently-processing communication device, exit response information indicating that the currently-processing communication device is to exit the mesh network, the currently-processing communication device being one communication device among the one or more communication devices for which the exit processing is being performed,
the controller stops the exit processing for the currently-processing communication device and skips the exit processing for each remaining communication device among the one or more communication devices.

8. The control device according to one of the preceding claims,
wherein the number is a first number, and
when performing a plurality of instances of reception processing for causing the communicator to receive an identification signal which is output from and identifies each of the plurality of communication devices, to cause the plurality of communication devices to join the mesh network in sequence, the controller determines a second number for each of the plurality of communication devices according to a total number of instances of the reception processing, and
when causing the one or more communication devices among the plurality of communication devices to exit the mesh network, the controller causes the one or more communication devices to exit the mesh network in order from a communication device for which an absolute value of a difference between (i) the second number determined for the one communication device, among the plurality of communication devices, currently communicating with the communicator and (ii) the second number determined for each of the one or more communication devices is highest, and for which the first number determined for each of the one or more communication devices is highest.

9. The control device according to any one of claims 1 to 8,
wherein each of the plurality of communication devices is a lighting fixture.

10. A control method executed by a control device,
wherein the control device includes a controller and a communicator that communicates with a plurality of communication devices,
the plurality of communication devices join a mesh network, and
the control method comprising:
determining, by the controller, for each of a plurality of communication device, a number for the communication device according to a communication state of the communication device; and
when causing one or more communication devices among the plurality of communication devices to exit the mesh network, performing, by the controller, exit processing for causing the one or more communication devices to exit the mesh network in order from a communication device for which an absolute value of a difference between (i) the number determined for one communication device, among the plurality of communication devices, currently communicating with the communicator and (ii) the number determined for each of the one or more communication devices is highest.
